(19) Europäisches Patentamt

European Patent Office

Office européen des brevets

(11) **EP 4 440 216 A1**

(12) **EUROPEAN PATENT APPLICATION**
published in accordance with Art. 153(4) EPC

(43) Date of publication:
**02.10.2024 Bulletin 2024/40**

(21) Application number: **22898376.3**

(22) Date of filing: **07.11.2022**

(51) International Patent Classification (IPC):
**H04W 72/02** (2009.01)  **H04W 4/46** (2018.01)
**H04W 28/04** (2009.01)  **H04W 72/0457** (2023.01)
**H04W 72/20** (2023.01)  **H04W 76/14** (2018.01)
**H04W 92/18** (2009.01)

(52) Cooperative Patent Classification (CPC):
**H04W 4/46; H04W 28/04; H04W 72/02;**
**H04W 72/0457; H04W 72/20; H04W 76/14;**
**H04W 92/18**

(86) International application number:
**PCT/JP2022/041298**

(87) International publication number:
**WO 2023/095592 (01.06.2023 Gazette 2023/22)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.11.2021  JP 2021192523**

(71) Applicant: **Sony Group Corporation**
**Tokyo 108-0075 (JP)**

(72) Inventors:
• **KUSASHIMA, Naoki**
  **Tokyo 108-0075 (JP)**
• **SHIMEZAWA, Kazuyuki**
  **Tokyo 108-0075 (JP)**
• **UCHIYAMA, Hiromasa**
  **Tokyo 108-0075 (JP)**
• **SUGAI, Ren**
  **Tokyo 108-0075 (JP)**

(74) Representative: **Witte, Weller & Partner**
**Patentanwälte mbB**
**Postfach 10 54 62**
**70047 Stuttgart (DE)**

(54) **COMMUNICATION DEVICE AND COMMUNICATION METHOD**

(57) Feedback of a plurality of pieces of SL-HARQ-ACK in sidelink communication is controlled. A communication device (terminal device 2) includes a reception unit (205), a transmission unit (207), and a control unit (203). The reception unit (205) receives a sidelink shared channel for sidelink communication that is device-to-device communication. The transmission unit (207) transmits a first sidelink feedback channel and a second sidelink feedback channel for transmitting response information of the sidelink shared channel. The control unit (203) performs control to select the first sidelink feedback channel and the second sidelink feedback channel, and to cause the transmission unit to transmit the selected result.

FIG.3

**Description**

Field

The present disclosure relates to a communication device and a communication method.

Background

A wireless access scheme and a wireless network for cellular mobile communication (hereinafter, also referred to as "Long Term Evolution (LTE)", "LTE-Advanced (LTE-A)", "LTE-Advanced Pro (LTE-A Pro)", "New Radio (NR)", "New Radio Access Technology (NRAT)", "Evolved Universal Terrestrial Radio Access (EUTRA)", or "Further EUTRA (FEUTRA)") have been studied in the 3rd Generation Partnership Project (3GPP) (registered trademark)). Note that, in the following description, LTE includes LTE-A, LTE-A Pro, and EUTRA, and NR includes NRAT and FEUTRA. In LTE and NR, a base station device (base station) is also referred to as an evolved NodeB (eNodeB), and a terminal device (mobile station, mobile station device, or terminal) is also referred to as user equipment (UE). LTE and NR are cellular communication systems in which a plurality of areas covered by a base station device is located in a cell shape. A single base station device may manage a plurality of cells.

A sidelink has been introduced into 3GPP using communication for public safety and vehicle-to-vehicle communication (vehicle to anything (V2X)) as main use cases. In a sidelink in NR, unicast of one-to-one communication and groupcast of one-to-other communication are supported. Into the unicast and the groupcast, in order to improve communication quality, a mechanism for feeding back response information (HARQ-ACK) that responds whether or not a physical sidelink shared channel (PSSCH) is successfully decoded has been introduced. A communication device adopting such a technique is disclosed in, for example, Patent Literature 1.

Furthermore, utilization of a sidelink is expected not only for V2X but also for communication of commercial use such as XR(virtual reality (VR), augmented reality (AR), or mixed reality (MR)) gaming, real-time sharing of XR content, media sharing, wireless tethering, an industrial Internet of Things (IoT) network, and a home network. In sensor sharing and commercial use of V2X, an increase in communication speed of a sidelink is required, and introduction of carrier aggregation in the sidelink is studied as one of techniques of achieving the increase in communication speed. Carrier aggregation is a technique of extending a frequency bandwidth by bundling and simultaneously using a plurality of frequency bands (cells and carriers).

Citation List

Patent Literature

Patent Literature 1: WO 2020/166280 A

Summary

Technical Problem

However, in a physical sidelink feedback channel (PSFCH format 0) in conventional sidelink communication, there is a problem that two or more pieces of response information (HARQ-ACK) cannot be fed back while being included in one PSFCH.

Therefore, the present disclosure proposes a configuration of a new PSFCH that provides SL-HARQ-ACK in carrier aggregation of a sidelink, a communication device such as a base station device or a terminal device that controls feedback of SL-HARQ-ACK, and a communication method in a communication system in which the terminal device communicates.

Solution to Problem

A communication device according to the present disclosure includes: a reception unit that receives a sidelink shared channel for sidelink communication that is device-to-device communication; a transmission unit that transmits a first sidelink feedback channel and a second sidelink feedback channel for transmitting response information of the sidelink shared channel; and a control unit that performs control to select the first sidelink feedback channel and the second sidelink feedback channel, and to cause the transmission unit to transmit the selected result.

Brief Description of Drawings

FIG. 1 is a diagram illustrating an outline of sidelink communication according to an embodiment of the present disclosure.

FIG. 2 is a schematic block diagram illustrating a configuration of a base station device according to an embodiment of the present disclosure.

FIG. 3 is a schematic block diagram illustrating a configuration of a terminal device according to an embodiment of the present disclosure.

FIG. 4 is a diagram illustrating a configuration example of a frame of a sidelink according to an embodiment of the present disclosure.

FIG. 5 is a diagram illustrating a configuration example of a frame of a sidelink according to an embodiment of the present disclosure.

FIG. 6 is a diagram illustrating a configuration example of a resource pool of a sidelink according to an embodiment of the present disclosure.

FIG. 7 is a diagram illustrating an example of a resource allocation mode 2(d) according to an embodiment of the present disclosure.

FIG. 8 is a diagram illustrating an example of a relationship between PSSCH and PSFCH resources according to an embodiment of the present disclosure.

FIG. 9 is a diagram illustrating an example of carrier aggregation of a sidelink according to an embodiment of the present disclosure.

FIG. 10 is a diagram illustrating an example of simultaneous transmission of a plurality of PSFCHs according to a first embodiment of the present disclosure.

FIG. 11 is a diagram illustrating an example of transmission of a second PSFCH according to a second embodiment of the present disclosure.

FIG. 12 is a diagram illustrating an example of transmission of a first PSFCH and a second PSFCH according to a third embodiment of the present disclosure.

FIG. 13 is a diagram illustrating an example of a resource region of the second PSFCH according to the third embodiment of the present disclosure.

FIG. 14 is a diagram illustrating another example of the resource region of the second PSFCH according to the third embodiment of the present disclosure.

FIG. 15 is a diagram illustrating another example of the resource region of the second PSFCH according to the third embodiment of the present disclosure.

FIG. 16 is a diagram illustrating an example of a format of the second PSFCH according to the third embodiment of the present disclosure.

FIG. 17 is a diagram illustrating another example of the format of the second PSFCH according to the third embodiment of the present disclosure.

FIG. 18A is a diagram illustrating an example of a semi-static HARQ codebook in the second PSFCH according to the third embodiment of the present disclosure.

FIG. 18B is a diagram illustrating an example of transmission of the second PSFCH according to the third embodiment of the present disclosure.

FIG. 19A is a diagram illustrating an example of a dynamic HARQ codebook in the second PSFCH according to the third embodiment of the present disclosure.

FIG. 19B is a diagram illustrating an example of transmission of the second PSFCH according to the third embodiment of the present disclosure.

FIG. 20A is a diagram illustrating an example of a one-shot HARQ codebook on the second PSFCH according to the third embodiment of the present disclosure.

FIG. 20B is a diagram illustrating an example of transmission of the second PSFCH according to the third embodiment of the present disclosure.

FIG. 21 is a diagram illustrating an example of a communication method according to the third embodiment of the present disclosure.

FIG. 22 is a diagram illustrating another example of the communication method according to the third embodiment of the present disclosure.

FIG. 23 is a diagram illustrating another example of the communication method according to the third embodiment of the present disclosure.

**EP 4 440 216 A1**

Description of Embodiments

Hereinafter, embodiments of the present disclosure will be described in detail with reference to the drawings. Description will be given in the following order. Note that in the following embodiments, the same portion is denoted by the same reference numeral, and redundant description will be omitted.

(Basic configuration)

[Radio communication system]

In the present embodiment, a radio communication system includes at least a base station device 1 and a terminal device 2. The base station device 1 can accommodate a plurality of terminal devices. The base station device 1 can be connected to another base station device by means of an X2 interface. In addition, the base station device 1 can be connected to an evolved packet core (EPC) by means of an SI interface. Furthermore, the base station device 1 can be connected to a mobility management entity (MME) by means of an S1-MME interface, and can be connected to a serving gateway (S-GW) by means of an S1-U interface. The S1 interface supports a many-to-many connection between MME and/or S-GW and the base station device 1. In the present embodiment, each of the base station device 1 and the terminal device 2 supports LTE and/or NR.

[Overview of sidelink communication]

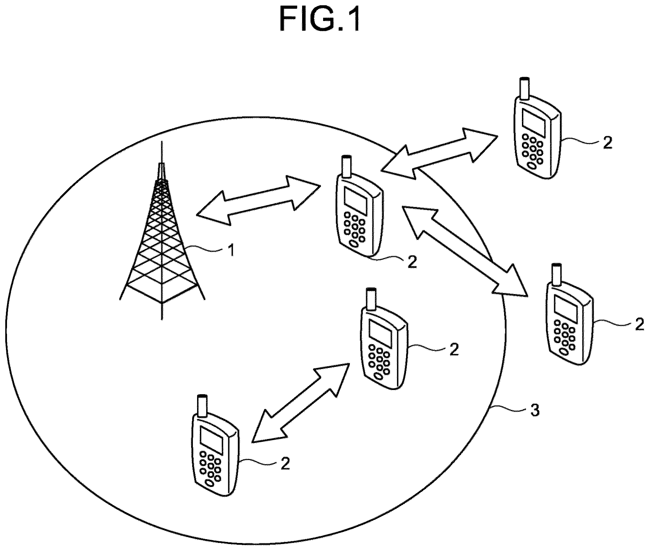

FIG. 1 is a diagram illustrating an outline of sidelink communication according to an embodiment of the present disclosure. There is one use case where two or more terminal devices 2 are present inside a cell 3 configured by the base station device 1 and sidelink communication is performed. There is another use case where sidelink communication is performed in a case where at least one terminal device 2 out of two or more terminal devices 2 is present inside a cell 3 configured by the base station device 1 and the other terminal device 2 is present outside the cell 3. Furthermore, by performing communication with the base station device 1, the terminal device 2 present inside the cell 3 can perform relay between the base station device 1 and the terminal device 2 present outside the cell 3.

Note that presence of the terminal device 2 inside the cell 3 can also be said to be a state in which the quality of a downlink signal from the base station device 1, received by the terminal device 2 is equal to or higher than a predetermined standard. In addition, the presence of the terminal device 2 inside the cell 3 can also be said to be a state in which a predetermined downlink channel from the base station device 1, received by the terminal device 2 can be decoded with a predetermined probability or more. In other words, presence of the terminal device 2 outside the cell 3 can also be said to be a state in which the quality of a downlink signal from the base station device 1, received by the terminal device 2 is equal to or lower than a predetermined standard. In addition, the presence of the terminal device 2 outside the cell 3 can also be said to be a state in which a predetermined downlink channel from the base station device 1, received by the terminal device 2 cannot be decoded with a predetermined probability or more.

Hereinafter, in the present embodiment, two terminal devices that perform transmission and reception by sidelink communication will be referred to as a first terminal device and a second terminal device. In particular, in the present embodiment, a terminal device that receives information regarding sidelink communication from a base station device and transmits a sidelink control channel is referred to as the first terminal device, and a terminal device other than the first terminal device is referred to as the second terminal device.

[Configuration example of base station device]

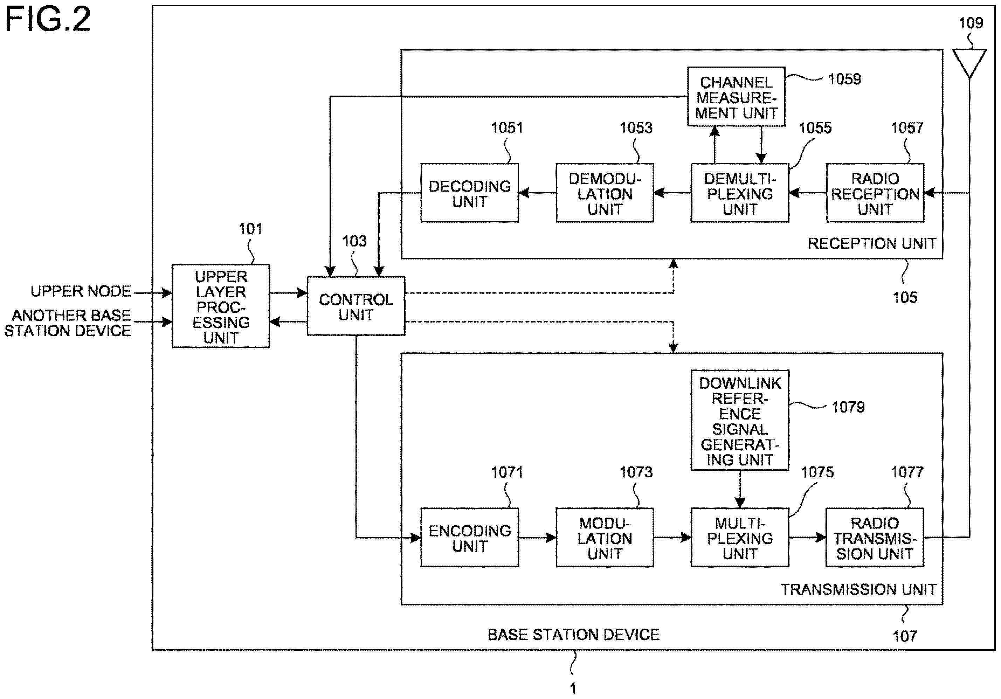

FIG. 2 is a schematic block diagram illustrating a configuration of the base station device 1 according to an embodiment of the present disclosure. As illustrated, the base station device 1 includes an upper layer processing unit 101, a control unit 103, a reception unit 105, a transmission unit 107, and a transmission/reception antenna 109. The reception unit 105 includes a decoding unit 1051, a demodulation unit 1053, a demultiplexing unit 1055, a radio reception unit 1057, and a channel measurement unit 1059. The transmission unit 107 includes an encoding unit 1071, a modulation unit 1073, a multiplexing unit 1075, a radio transmission unit 1077, and a downlink reference signal generating unit 1079.

As described above, the base station device 1 can support one or more RATs. Some or all of the units included in the base station device 1 illustrated in FIG. 2 can be individually configured according to RAT. For example, the reception unit 105 and the transmission unit 107 are individually configured by LTE and NR. In an NR cell, some or all of the units included in the base station device 1 illustrated in FIG. 2 can be individually configured according to a parameter set related to a transmission signal. For example, in a certain NR cell, the radio reception unit 1057 and the radio transmission unit 1077 can be individually configured according to a parameter set related to a transmission signal.

The upper layer processing unit 101 performs processing of a medium access control (MAC) layer, a packet data convergence protocol (PDCP) layer, a radio link control (RLC) layer, and a radio resource control (RRC) layer. In addition, the upper layer processing unit 101 generates control information in order to control the reception unit 105 and the transmission unit 107, and outputs the control information to the control unit 103.

The control unit 103 controls the reception unit 105 and the transmission unit 107 on the basis of the control information from the upper layer processing unit 101. The control unit 103 generates control information to the upper layer processing unit 101 and outputs the control information to the upper layer processing unit 101. The control unit 103 receives, as an input, a decoded signal from the decoding unit 1051 and a channel estimation result from the channel measurement unit 1059. The control unit 103 outputs a signal to be encoded to the encoding unit 1071. In addition, the control unit 103 is used for controlling the whole or a part of the base station device 1.

The upper layer processing unit 101 performs processing and management related to RAT control, radio resource control, subframe setting, scheduling control, and/or CSI report control. The processing and management in the upper layer processing unit 101 are performed for each terminal device or commonly for terminal devices connected to the base station device. The processing and management in the upper layer processing unit 101 may be performed only by the upper layer processing unit 101 or may be acquired from an upper node or another base station device. In addition, the processing and management in the upper layer processing unit 101 may be individually performed according to RAT. For example, the upper layer processing unit 101 individually performs processing and management in LTE and processing and management in NR.

In the RAT control in the upper layer processing unit 101, management related to RAT is performed. For example, in the RAT control, management related to LTE and/or management related to NR are performed. The management related to NR includes setting and processing of a parameter set related to a transmission signal in an NR cell.

In the radio resource control in the upper layer processing unit 101, generation and/or management of downlink data (transport block), system information, an RRC message (RRC parameter), and/or a MAC control element (CE) are performed.

In subframe setting in the upper layer processing unit 101, management of subframe setting, subframe pattern setting, uplink-downlink setting, uplink reference UL-DL setting, and/or downlink reference UL-DL setting is performed. Note that the subframe setting in the upper layer processing unit 101 is also referred to as base station subframe setting. In addition, the subframe setting in the upper layer processing unit 101 can be determined on the basis of an uplink traffic volume and a downlink traffic volume. In addition, the subframe setting in the upper layer processing unit 101 can be determined on the basis of a scheduling result of scheduling control in the upper layer processing unit 101.

In the scheduling control in the upper layer processing unit 101, a frequency and a subframe to which a physical channel is allocated, and an encoding ratio, a modulation method, transmission power, and the like of the physical channel are determined on the basis of received channel state information, and an estimation value of a propagation path, the quality of a channel, and the like input from the channel measurement unit 1059. For example, the control unit 103 generates control information (DCI format) on the basis of a scheduling result of scheduling control in the upper layer processing unit 101.

In the CSI report control in the upper layer processing unit 101, a CSI report of the terminal device 2 is controlled. For example, setting related to a CSI reference resource to be assumed for calculating CSI in the terminal device 2 is controlled.

Under control of the control unit 103, the reception unit 105 receives a signal transmitted from the terminal device 2 via the transmission/reception antenna 109, further performs reception processing such as separation, demodulation, or decoding, and outputs information that has been subjected to the reception processing to the control unit 103. Note that the reception processing in the reception unit 105 is performed on the basis of setting defined in advance or setting of which the base station device 1 notifies the terminal device 2.

The radio reception unit 1057 performs, on an uplink signal received via the transmission/reception antenna 109, conversion (down conversion) to an intermediate frequency, removal of an unnecessary frequency component, control of an amplification level such that a signal level is appropriately maintained, quadrature demodulation based on an -phase component and a quadrature component of the received signal, conversion from an analog signal to a digital signal, removal of a guard interval (GI), and/or extraction of a frequency domain signal by fast Fourier transform (FFT).

The demultiplexing unit 1055 separates an uplink channel such as a PUCCH or a PUSCH and/or an uplink reference signal from a signal input from the radio reception unit 1057. The demultiplexing unit 1055 outputs the uplink reference signal to the channel measurement unit 1059. The demultiplexing unit 1055 compensates a propagation path for the uplink channel from an estimation value of the propagation path input from the channel measurement unit 1059.

The demodulation unit 1053 demodulates a received signal using a modulation method such as binary phase shift keying (BPSK), quadrature phase shift keying (QPSK), 16 quadrature amplitude modulation (QAM), 64QAM, or 256QAM with respect to a modulation symbol of the uplink channel. The demodulation unit 1053 performs separation and demodulation of a MIMO multiplexed uplink channel.

The decoding unit 1051 performs decoding processing on an encoded bit of the demodulated uplink channel. The decoded uplink data and/or uplink control information are output to the control unit 103. The decoding unit 1051 performs decoding processing on a PUSCH for each transport block.

The channel measurement unit 1059 measures an estimation value of a propagation path and/or the quality of a channel, and the like from the uplink reference signal input from the demultiplexing unit 1055, and outputs the estimation value and/or the quality of the channel, and the like to the demultiplexing unit 1055 and/or the control unit 103. For example, the channel measurement unit 1059 measures an estimation value of a propagation path for performing propagation path compensation on a PUCCH or a PUSCH using UL-DMRS, and measures the quality of a channel in an uplink using SRS.

Under control of the control unit 103, the transmission unit 107 performs transmission processing such as encoding, modulation, or multiplexing on downlink control information and downlink data input from the upper layer processing unit 101. For example, the transmission unit 107 generates and multiplexes a PHICH, a PDCCH, an EPDCCH, a PDSCH, and a downlink reference signal to generate a transmission signal. Note that the transmission processing in the transmission unit 107 is performed on the basis of setting defined in advance, setting of which the base station device 1 notifies the terminal device 2, or setting notification of which is given through a PDCCH or an EPDCCH transmitted in the same subframe.

The encoding unit 1071 encodes a HARQ indicator (HARQ-ACK or ACK/NACK), downlink control information, and downlink data input from the control unit 103 using a predetermined encoding method such as block encoding, convolutional encoding, or turbo encoding. The modulation unit 1073 modulates an encoded bit input from the encoding unit 1071 by a predetermined modulation method such as BPSK, QPSK, 16QAM, 64QAM, or 256QAM. The downlink reference signal generating unit 1079 generates a downlink reference signal on the basis of a physical cell identification (PCI), an RRC parameter set in the terminal device 2, and the like. The multiplexing unit 1075 multiplexes a modulation symbol of each channel and the downlink reference signal, and locates the multiplexed result in a predetermined resource element.

The radio transmission unit 1077 performs, on the signal from the multiplexing unit 1075, processing such as conversion to a signal in a time domain by inverse fast Fourier transform (IFFT), addition of a guard interval, generation of a baseband digital signal, conversion to an analog signal, quadrature modulation, conversion from a signal of an intermediate frequency to a signal of a high frequency (up convert), removal of an extra frequency component, or power amplification to generate a transmission signal. The transmission signal output from the radio transmission unit 1077 is transmitted from the transmission/reception antenna 109.

[Configuration example of terminal device]

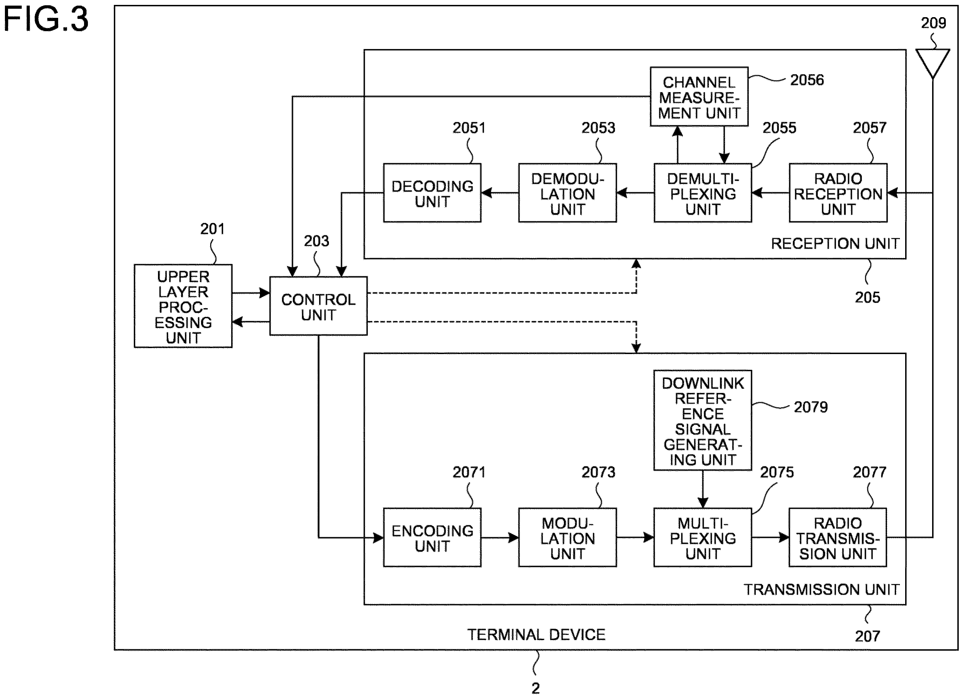

FIG. 3 is a schematic block diagram illustrating a configuration of the terminal device 2 according to an embodiment of the present disclosure. As illustrated, the terminal device 2 includes an upper layer processing unit 201, a control unit 203, a reception unit 205, a transmission unit 207, and a transmission/reception antenna 209. The reception unit 205 includes a decoding unit 2051, a demodulation unit 2053, a demultiplexing unit 2055, a radio reception unit 2057, and a channel measurement unit 2059. The transmission unit 207 includes an encoding unit 2071, a modulation unit 2073, a multiplexing unit 2075, a radio transmission unit 2077, and an uplink reference signal generating unit 2079.

As described above, the terminal device 2 can support one or more RATs. Some or all of the units included in the terminal device 2 illustrated in FIG. 3 can be individually configured according to RAT. For example, the reception unit 205 and the transmission unit 207 are individually configured by LTE and NR. In an NR cell, some or all of the units included in the terminal device 2 illustrated in FIG. 3 can be individually configured according to a parameter set related to a transmission signal. For example, in a certain NR cell, the radio reception unit 2057 and the radio transmission unit 2077 can be individually configured according to a parameter set related to a transmission signal.

The upper layer processing unit 201 outputs uplink data (transport block) to the control unit 203. The upper layer processing unit 201 performs processing of a medium access control (MAC) layer, a packet data convergence protocol (PDCP) layer, a radio link control (RLC) layer, and a radio resource control (RRC) layer. In addition, the upper layer processing unit 201 generates control information in order to control the reception unit 205 and the transmission unit 207, and outputs the control information to the control unit 203.

The control unit 203 controls the reception unit 205 and the transmission unit 207 on the basis of the control information from the upper layer processing unit 201. The control unit 203 generates control information to the upper layer processing unit 201 and outputs the control information to the upper layer processing unit 201. The control unit 203 receives, as an input, a decoded signal from the decoding unit 2051 and a channel estimation result from the channel measurement unit 2059. The control unit 203 outputs a signal to be encoded to the encoding unit 2071. In addition, the control unit 203 may be used for controlling the whole or a part of the terminal device 2.

The upper layer processing unit 201 performs processing and management related to RAT control, radio resource control, subframe setting, scheduling control, and/or CSI report control. The processing and management in the upper layer processing unit 201 are performed on the basis of setting defined in advance and/or setting on the basis of control information which is set by the base station device 1 or of which the base station device 1 notifies. For example, the control information from the base station device 1 includes an RRC parameter, a MAC control element, or DCI. In addition, the processing and management in the upper layer processing unit 201 may be individually performed according to RAT. For example, the upper layer processing unit 201 individually performs processing and management in LTE and processing and management in NR.

In the RAT control in the upper layer processing unit 201, management related to RAT is performed. For example, in the RAT control, management related to LTE and/or management related to NR are performed. The management related to NR includes setting and processing of a parameter set related to a transmission signal in an NR cell.

In the radio resource control in the upper layer processing unit 201, setting information in its own device is managed. In the radio resource control in the upper layer processing unit 201, generation and/or management of uplink data (transport block), system information, an RRC message (RRC parameter), and/or a MAC control element (CE) are performed.

In the subframe setting in the upper layer processing unit 201, subframe setting in the base station device 1 and/or a base station device different from the base station device 1 is managed. The subframe setting includes setting of an uplink or a downlink for a subframe, subframe pattern setting, uplink-downlink setting, uplink reference UL-DL setting, and/or downlink reference UL-DL setting. Note that the subframe setting in the upper layer processing unit 201 is also referred to as terminal subframe setting.

In the scheduling control in the upper layer processing unit 201, control information for performing control related to scheduling for the reception unit 205 and the transmission unit 207 is generated on the basis of DCI (scheduling information) from the base station device 1.

In the CSI report control in the upper layer processing unit 201, control related to CSI report to the base station device 1 is performed. For example, in the CSI report control, setting related to a CSI reference resource to be assumed for calculating CSI in the channel measurement unit 2059 is controlled. In the CSI report control, a resource (timing) used for reporting CSI is controlled on the basis of DCI and/or an RRC parameter.

Under control of the control unit 203, the reception unit 205 receives a signal transmitted from the base station device 1 via the transmission/reception antenna 209, further performs reception processing such as separation, demodulation, or decoding, and outputs information that has been subjected to the reception processing to the control unit 203. Note that the reception processing in the reception unit 205 is performed on the basis of setting defined in advance, or notification or setting from the base station device 1.

The radio reception unit 2057 performs, on an uplink signal received via the transmission/reception antenna 209, conversion (down conversion) to an intermediate frequency, removal of an unnecessary frequency component, control of an amplification level such that a signal level is appropriately maintained, quadrature demodulation based on in-phase components and quadrature components of the received signal, conversion from an analog signal to a digital signal, removal of a guard interval (GI), and/or extraction of a frequency domain signal by fast Fourier transform (FFT).

The demultiplexing unit 2055 separates a downlink channel such as a PHICH, a PDCCH, an EPDCCH, or a PDSCH, a downlink synchronization signal, and/or a downlink reference signal from the signal input from the radio reception unit 2057. The demultiplexing unit 2055 outputs the downlink reference signal to the channel measurement unit 2059. The demultiplexing unit 2055 compensates a propagation path for the downlink channel from an estimation value of the propagation path input from the channel measurement unit 2059.

The demodulation unit 2053 demodulates a received signal using a modulation method such as BPSK, QPSK, 16QAM, 64QAM, or 256QAM with respect to a modulation symbol of the downlink channel. The demodulation unit 2053 performs separation and demodulation of a MIMO multiplexed downlink channel.

The decoding unit 2051 performs decoding processing on an encoded bit of the demodulated downlink channel. The decoded downlink data and/or downlink control information are output to the control unit 203. The decoding unit 2051 performs decoding processing on a PDSCH for each transport block.

The channel measurement unit 2059 measures an estimation value of a propagation path and/or the quality of a channel, and the like from the downlink reference signal input from the demultiplexing unit 2055, and outputs the estimation value and/or the quality of the channel, and the like to the demultiplexing unit 2055 and/or the control unit 203. The downlink reference signal used for measurement by the channel measurement unit 2059 may be determined on the basis of a transmission mode set by at least an RRC parameter and/or another RRC parameter. For example, DL-DMRS measures an estimation value of a propagation path for performing propagation path compensation for a PDSCH or an EPDCCH. CRS measures an estimation value of a propagation path for performing propagation path compensation on a PDCCH or a PDSCH and/or a channel in a downlink for reporting CSI. CSI-RS measures a channel in a downlink for reporting CSI. The channel measurement unit 2059 calculates reference signal received power (RSRP) and/or reference signal received quality (RSRQ) on the basis of CRS, CSI-RS, or a detection signal, and outputs the RSRP and/or the RSRQ to the upper layer processing unit 201.

Under control of the control unit 203, the transmission unit 207 performs transmission processing such as encoding, modulation, or multiplexing on uplink control information and uplink data input from the upper layer processing unit 201. For example, the transmission unit 207 generates and multiplexes an uplink channel such as a PUSCH or a PUCCH and/or an uplink reference signal to generate a transmission signal. Note that the transmission processing in the transmission unit 207 is performed on the basis of setting defined in advance, or setting or notification from the base station device 1.

The encoding unit 2071 encodes a HARQ indicator (HARQ-ACK or ACK/NACK), uplink control information, and uplink data input from the control unit 203 using a predetermined encoding method such as block encoding, convolutional encoding, or turbo encoding. The modulation unit 2073 modulates an encoded bit input from the encoding unit 2071 by a predetermined modulation method such as BPSK, QPSK, 16QAM, 64QAM, or 256QAM. The uplink reference signal generating unit 2079 generates an uplink reference signal on the basis of an RRC parameter or the like set in the terminal device 2. The multiplexing unit 2075 multiplexes a modulation symbol of each channel and the uplink reference signal and locates the multiplexed symbol in a predetermined resource element.

The radio transmission unit 2077 performs processing such as conversion to a signal in a time domain by inverse fast Fourier transform (IFFT), addition of a guard interval, generation of a baseband digital signal, conversion to an analog signal, quadrature modulation, conversion from a signal of an intermediate frequency to a signal of a high frequency (up convert), removal of an extra frequency component, or power amplification on the signal from the multiplexing unit 2075 to generate a transmission signal. The transmission signal output from the radio transmission unit 2077 is transmitted from the transmission/reception antenna 209.

Note that the base station device 1 is an example of a communication device described in the claims. The terminal device 2 is an example of the communication device described in the claims.

[Details of sidelink communication]

Sidelink communication is direct communication between a terminal device and a terminal device different from the terminal device. In the sidelink, candidates for time and a frequency resource used for transmission and reception of the sidelink, called a resource pool are set in the terminal device. A resource for transmission and reception of the sidelink is selected from the resource pool, and the sidelink communication is performed. Since the sidelink communication is performed using an uplink resource (uplink subframe or uplink component carrier), the resource pool is also set in the uplink subframe or the uplink component carrier.

A sidelink physical channel includes a physical sidelink control channel (PSCCH), a physical sidelink shared channel (PSSCH), a physical sidelink feedback channel (PSFCH), and the like.

[Configuration of frame of sidelink]

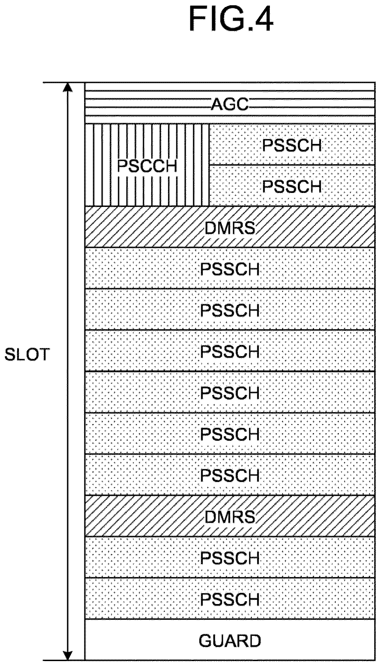

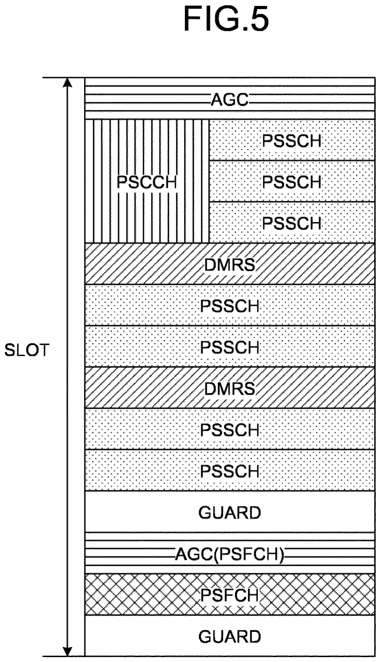

FIGS. 4 and 5 are diagrams illustrating configuration examples of a frame of a sidelink according to an embodiment of the present disclosure. FIG. 4 illustrates an example of a frame of a sidelink in which a PSCCH includes two symbols. In addition, the frame of FIG. 4 illustrates an example of a case where two symbols are allocated for a DMRS and no symbol is allocated for a PSFCH.

FIG. 5 illustrates an example of a frame of a sidelink in which a PSCCH includes three symbols. In addition, the frame of FIG. 5 illustrates an example of a case where two symbols are allocated for a DMRS and a symbol is allocated for a PSFCH.

Here, the PSCCH is used for transmitting sidelink control information (SCI). The PSCCH includes two symbols or three symbols. Mapping of information bits of the sidelink control information is defined as an SCI format. The sidelink control information includes a sidelink grant (sidelink assignment). The sidelink grant is used for scheduling the PSSCH.

The PSSCH is used for transmitting sidelink data (sidelink shared channel (SL-SCH)). Note that the PSSCH may also be used for transmitting control information of an upper layer.

The PSFCH is used for feeding back a HARQ response (HARQ-ACK or ACK/NACK) to a decoding result of the PSSCH to a transmission terminal device. The PSFCH is located in the 13th symbol. Resources of the PSFCH do not have to be allocated in all slots. In this case, a resource can be utilized as the PSSCH.

A configuration of a frame of the sidelink includes an AGC symbol. This AGC symbol may be used for automatic gain control (AGC) of a reception terminal device. The AGC symbol is located in the first symbol of transmission. Specifically, when the PSSCH is transmitted, the AGC symbol is located in the first symbol, and when the PSFCH is transmitted, the AGC symbol is located in the twelfth symbol. The AGC symbol is generated by copying the second symbol of transmission. That is, in the sidelink transmission, the first symbol and the second symbol of the transmission are the same signal.

The configuration of the frame of the sidelink includes a guard (GUARD) symbol. In the sidelink, transmission and reception are switched by the guard symbol (guard time). The guard symbol is located at the 14th symbol. Furthermore, in a slot in which the PSFCH is transmitted, the guard symbol is also located in the eleventh symbol.

[Resource pool of sidelink]

A resource pool is set in the terminal device by the base station device using SIB or a dedicated RRC message. Alternatively, the resource pool is set using information regarding a resource pool set in the terminal device in advance. A resource pool of time is indicated by period information, offset information, and subframe bitmap information. A resource pool of a frequency is indicated by a start location of a resource block, an end location of the resource block, and the number of consecutive resource blocks.

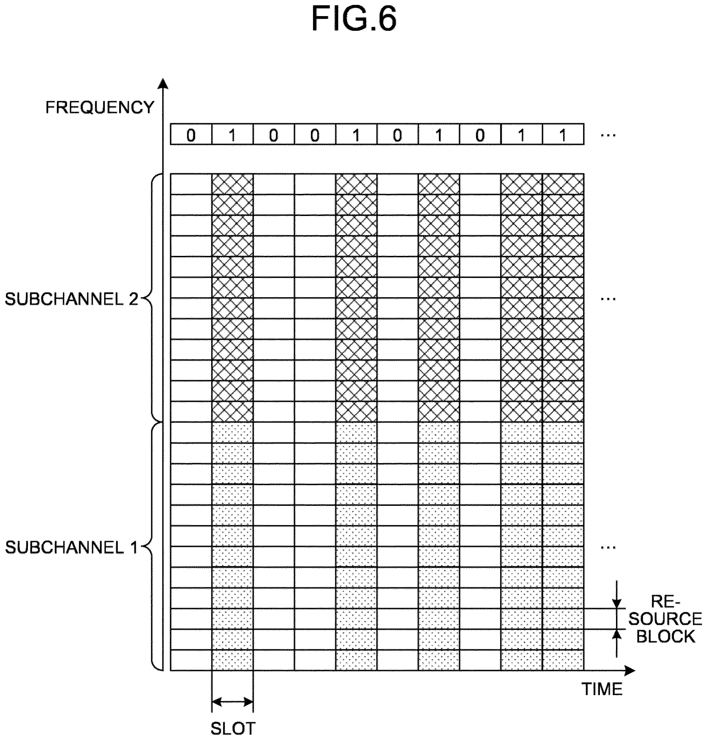

FIG. 6 is a diagram illustrating a configuration example of a resource pool of a sidelink according to an embodiment of the present disclosure. In the sidelink, a resource pool (sidelink resource pool) is set as a resource used for transmission of a PSSCH and reception of the PSSCH. In a frequency axis, the resource pool includes one or more consecutive subchannels. The subchannel includes one or more consecutive physical resource blocks (PRBs). The number of the subchannels and the size of each of the subchannels are set by an upper layer parameter.

A slot set as the resource pool is indicated by a bitmap. Each bit of the bitmap corresponds to a slot that can be set as the resource pool of the sidelink. For example, when a bit value indicates a value "1", a corresponding slot is set as the resource pool, and when a bit value indicates a value "0", a corresponding slot is not set as the resource pool. The length of this bitmap is set by an upper layer.

The slot set as the resource pool is determined according to a predetermined condition in addition to being indicated by the bitmap. For example, a slot including an S-SS/PSBCH block is not set as the resource pool. In addition, a slot that does not semi-statically include a predetermined number of uplink symbols is not set as the resource pool. In addition, a reserved slot is not set as the resource pool.

Note that a device that sets the resource pool may be other than the base station device. Examples of the device other than the base station device include a representative terminal device (primary terminal device or master terminal device).

[Sidelink resource allocation method]

Examples of a method for allocating a resource to a sidelink include a "resource allocation mode 1 (sidelink resource allocation mode 1)" method in which a base station device allocates a resource for transmission of a sidelink physical channel (PSCCH and PSSCH) and a "resource allocation mode 2 (sidelink resource allocation mode 2)" method in which a terminal device itself performs sensing and selects a resource for transmission of a sidelink physical channel.

(1) Resource allocation mode 1

In the resource allocation mode 1, when a transmission packet is generated in a terminal device, a resource to be used for transmission of the packet in a resource pool is allocated by a base station device.

In the resource allocation mode 1, a resource used for sidelink transmission is designated by dynamic grant or RRC signalling transmitted from the base station device. Specifically, in the resource allocation mode 1, dynamic grant, configured grant type 1, and configured grant type 2 are supported for PSSCH transmission and PSCCH transmission. In the sidelink dynamic grant, PSSCH transmission is scheduled by DCI Format 3_0. In the sidelink configured grant type 1, a resource for PSSCH transmission is allocated by RRC signalling. In the sidelink configured grant type 2, the configured grant is activated by DCI Format 3_0, and PSSCH transmission is performed using a resource designated by RRC signalling.

In the resource allocation mode 1, since resource allocation is performed by the base station device every time a transmission packet is generated, a collision frequency between sidelink communications can be reduced. Meanwhile, much signaling overhead is required between the base station device and the terminal device.

(2) Resource allocation mode 2

In the resource allocation mode 2, a resource pool is allocated in advance by the base station device or a network.
The resource allocation mode 2 is further classified into the following four types of resource allocation modes.
Resource allocation mode 2(a): The terminal device autonomously selects a transmission sidelink resource.
Resource allocation mode 2(b): The terminal device assists sidelink resource selection of another transmission terminal.
Resource allocation mode 2(c): Sidelink transmission by a configured grant
Resource allocation mode 2(d): The terminal device schedules sidelink transmission of another terminal device.
In the resource allocation mode 2, the terminal device can select a sidelink resource in a resource selection window and reserve a future sidelink resource on the basis of a measurement result of an interference pattern in a sensing window and a reservation status of a sidelink resource in the sensing window. By using a result of the prediction, the terminal device can select or reserve a sidelink resource available for transmission of the packet, that is, a sidelink resource predicted not to be used for transmission of another packet.

In the resource allocation mode 2, while signaling overhead is little between the base station device and the terminal device, packet collision may occur.

(2-1) Resource allocation mode 2(a)

In the resource allocation mode 2(a), when a packet is generated in the terminal device, the terminal device autonomously selects a sidelink resource to be used for transmission of the packet in the resource pool. The terminal device that transmits the packet first performs sensing in order to discover a sidelink resource used for transmission of the packet from the resource pool. Next, the terminal device selects a sidelink resource from the resource pool on the basis of a result of the sensing. Then, the terminal device transmits the packet using the selected sidelink resource. In addition, at this time, the terminal device reserves a sidelink resource to be used for subsequent transmission of a packet as necessary.

This resource allocation mode 2(a) can be applied to both a semi-persistent method in which a resource is selected for a plurality of sidelink transmissions with different transport blocks and a dynamic method in which a resource is selected each time for sidelink transmission of each transport.

(2-2) Resource allocation mode 2(c)

In the resource allocation mode 2(c), a sidelink transmission pattern is set in the terminal device. The terminal device selects a sidelink resource used for transmission according to the set sidelink transmission pattern.

The sidelink transmission pattern is defined by the sizes, positions, and number of resources of time and frequency.

A plurality of sidelink transmission patterns can be set. When only one sidelink transmission pattern is set, the terminal device does not perform sensing. Meanwhile, when a plurality of sidelink transmission patterns is set, the terminal device performs sensing and selects a sidelink transmission pattern on the basis of the sensing result.

In out-of-coverage operation, one or more sidelink transmission patterns defined in each sidelink resource pool are set in advance. In addition, in in-coverage operation, one or more sidelink transmission patterns defined in each sidelink resource pool are set by the base station device.

(2-3) Resource allocation mode 2(d)

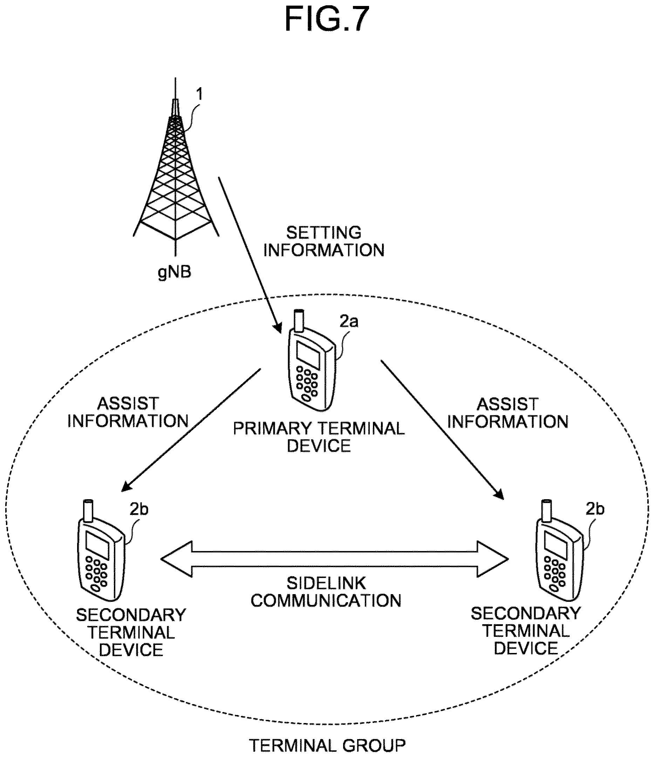

FIG. 7 is a diagram illustrating an example of the resource allocation mode 2(d) according to an embodiment of the present disclosure. The resource allocation mode 2(d) is applied in group-based side link communication including three or more terminal devices. In the group, a representative terminal device (primary terminal device) is defined. The representative terminal device reports information of other terminal devices (secondary terminal device or member terminal device) in the group to the base station device. The base station device 1 provides resource pool setting and resource setting of each terminal device in the group via the representative terminal device. In the resource allocation mode 2(d), since the member terminal device does not need to be directly connected to the base station device, signal overhead of a Uu link (communication link between the base station device and the terminal device) can be reduced. A terminal device that can be the representative terminal device and a function that can be provided are determined depending on a capability of the terminal device.

A representative terminal device 2a can provide predetermined assist information to the member terminal device. Examples of the assist information include resource pool setting, information regarding collision, COT sharing information, CSI, and information regarding the degree of congestion.

[Sensing in sidelink]

In the resource allocation mode 2, a sensing procedure is supported. SCI decoding from another terminal device and/or measurement of a sidelink resource are used as sensing in a sidelink.

In the sensing by SCI decoding, a terminal device acquires information of a sidelink resource included in SCI transmitted from another terminal device and scheduled to be used. From the SCI information, the terminal device determines a sidelink resource to be used for transmission while avoiding a resource scheduled to be used by another terminal device.

In sensing by measurement of a sidelink resource, a terminal performs L1 (Layer 1) sidelink RSRP measurement on the basis of a sidelink DMRS. When the measured RSRP is higher than a predetermined threshold, the terminal device recognizes that the measured sidelink resource is used for transmission by another terminal device, and determines a sidelink resource to be used for transmission while avoiding the sidelink resource.

In this way, the terminal device selects or reselects a sidelink resource on the basis of a result of the above sensing procedure.

[Details of PSFCH]

In the sidelink, when a cast type is indicated as unicast or groupcast and HARQ-enabled is indicated, response information (HARQ-ACK or ACK/NACK information) to the transmitted PSSCH is transmitted to a terminal device that has transmitted the PSSCH. The transmission of HARQ-ACK (SL-HARQ-ACK) to the PSSCH uses a PSFCH.

In the PSFCH, one PSFCH format (PSFCH format 0) is defined. PSFCH format 0 can include ACKnowledgement (ACK) or Negative ACKnowledgement (NACK) whose number of bits is 1 or less.

A resource in which the PSFCH is transmitted is referred to as a PSFCH transmission occasion resource. A slot in which the PSFCH is located is determined by a slot period of the PSFCH. The slot period of the PSFCH is set from 1, 2, and 4.

The PSFCH of the PSFCH format 0 includes one symbol and one resource block. The PSFCH of the PSFCH format 0 is located in the 13th symbol in the slot. The PSFCH is located in a resource block designated by an RRC parameter sl-PSFCH-RB-Set. Furthermore, in the PSFCH format 0, up to six different PSFCHs can be located in the same time/frequency resource by cyclic shift.

The PSFCH is transmitted using the most recent PSFCH transmission occasion resource after a time gap from a slot in which a corresponding PSSCH is transmitted. The time gap is set by an RRC parameter sl-MinTimeGapPSFCH, and includes two slots or three slots.

[Relationship between PSSCH and PSFCH resources]

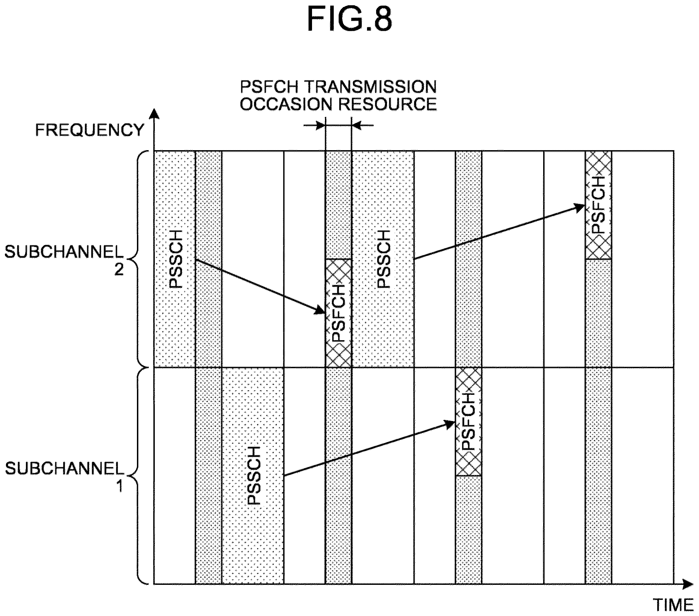

FIG. 8 is a diagram illustrating an example of a relationship between PSSCH and PSFCH resources according to an embodiment of the present disclosure. FIG. 8 is a diagram illustrating a relationship between PSSCH and PSFCH resources in a case where a slot period of the PSFCH is two slots and a time gap thereof is two slots.

The resource block of the PSFCH and a value of a sequence cyclic shift are determined on the basis of a source ID (identifier of a transmission terminal device). Furthermore, in a case of groupcast of ACK/NACK feedback, an offset for distinguishing PSFCH resources of a plurality of reception terminal devices is set by an upper layer.

The PSFCH of the PSFCH format 0 indicates ACK or NACK depending on a cyclic shift value. Specifically, when the cyclic shift value is a value "0" as compared with a reference value, NACK is indicated, and when the cyclic shift value is a value "6", ACK is indicated. Furthermore, the PSFCH supports HARQ-ACK feedback of only NACK in groupcast. When groupcast of only NACK is designated as a cast type, a PSFCH is transmitted in a resource corresponding to a case of NACK, and no PSFCH is transmitted in the resource in a case of ACK.

The transmission of a PSFCH can be disabled by RRC configuration or SCI indication. The transmission of a PSFCH can be disabled by setting a slot period to a value "0" in the RRC configuration or by indicating that the transmission of a PSFCH is disabled by a HARQ feedback enabled/disabled indicator included in SCI.

[Transmission power of PSFCH]

Transmission power of one PSFCH is calculated by the following formula:

$$P_{\text{PSFCH,one}} = P_{\text{O,PSFCH}} + 10\log_{10}(2^{\mu}) + \alpha_{\text{PSFCH}} \times PL \ [\text{dBm}]$$

Here, $P_{\text{O,PSFCH}}$ represents a value of an upper layer parameters dl-P0-PSFCH. In addition, $\alpha_{\text{PSFCH}}$ represents a value of an upper layer parameter dl-Alpha-PSFCH, and is a value "1" when dl-Alpha-PSFCH is not provided. PL represents a downlink path loss. $\mu$ represents SCS setting.

When total transmission power of PSFCHs scheduled to be transmitted does not exceed a maximum transmission power Pmax of a terminal device, all the PSFCHs scheduled to be transmitted can be transmitted. Meanwhile, when the total transmission power of the PSFCHs scheduled to be transmitted exceeds the maximum transmission power Pmax of the terminal device, the terminal device selects a PSFCH in descending order of priority of a corresponding PSSCH within a range not exceeding the maximum transmission power Pmax, and transmission of a PSFCH having a high priority of the corresponding PSSCH is dropped.

[Priority handling of PSFCH]

When one or more PSFCHs scheduled to be transmitted and one or more PSFCHs scheduled to be received are generated simultaneously in the same PSFCH transmission occasion, a terminal device determines a transmission or reception operation on the basis of a PSFCH having the highest priority among the PSFCHs. Specifically, when the PSFCH having the highest priority is a PSFCH scheduled to be transmitted, the terminal device performs transmission in the PSFCH transmission occasion, and when the PSFCH having the highest priority is a PSFCH scheduled to be received, the terminal device performs reception in the PSFCH transmission occasion.

When the PSFCH scheduled transmission number in the same PSFCH transmission occasion is larger than a PSFCH simultaneous transmittable maximum number of the terminal device, the terminal device selects a PSFCH to be transmitted in descending order of priority within a range not exceeding the PSFCH simultaneous transmittable maximum number of the terminal device. The priority is a value indicated by a priority field included in an SCI format 1-A corresponding to the PSFCH transmission occasion.

[Background]

A sidelink has been introduced into 3GPP using communication for public safety and vehicle-to-vehicle communication (vehicle to anything (V2X)) as main use cases. Furthermore, utilization of the sidelink is expected not only for V2X but also for communication of commercial use such as XR gaming, real-time sharing of XR content, media sharing, wireless tethering, an industrial IoT network, or a home network.

In sensor sharing and commercial use of V2X, an increase in communication speed of a sidelink is required, and introduction of carrier aggregation in the sidelink is studied as one of techniques of achieving the increase in communication speed. Carrier aggregation is a technique of extending a frequency bandwidth by bundling and simultaneously using a plurality of frequency bands (cells and carriers).

[Carrier aggregation of sidelink]

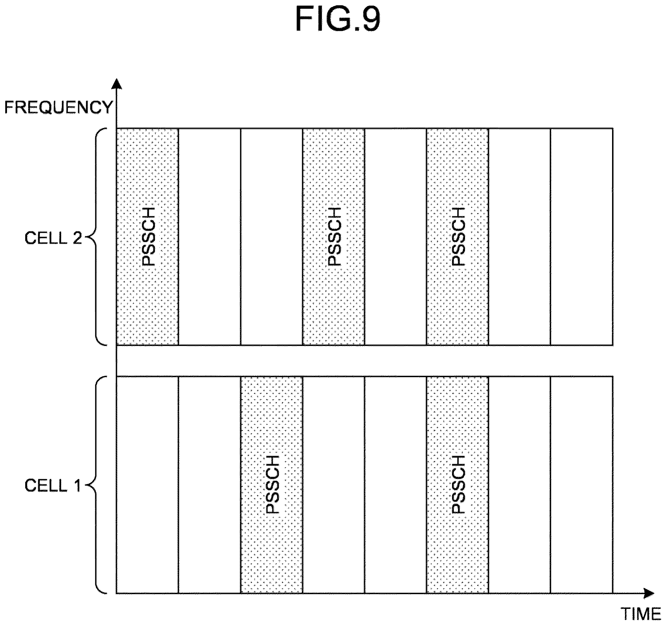

FIG. 9 is a diagram illustrating an example of carrier aggregation of a sidelink according to an embodiment of the present disclosure. In FIG. 9, two cells (carriers) for PSSCH transmission are set. By inclusion of two transceivers so as to correspond to transmission and reception of each cell, PSSCHs can be simultaneously transmitted from the cells. For example, in FIG. 9, two PSSCHs are simultaneously transmitted in the first and sixth slots. A throughput can be improved by carrier aggregation.

[Problem]

When a plurality of cells is set by carrier aggregation and unicast or groupcast PSSCHs are simultaneously transmitted, a plurality of pieces of SL-HARQ-ACK requiring feedback is simultaneously generated. A feedback method for the plurality of pieces of SL-HARQ-ACK in carrier aggregation is not discussed.

[Solution]

An embodiment of the present invention provides a configuration of a PSFCH capable of carrying a plurality of pieces of sidelink HARQ-ACK (SL-HARQ-ACK) in sidelink carrier aggregation, and a method for controlling feedback of the pieces of sidelink HARQ-ACK (SL-HARQ-ACK).

(First embodiment)

In a first embodiment of the present disclosure, an example in which SL-HARQ-ACK generated in each cell is transmitted on a PSFCH of each cell will be described. In other words, the first embodiment is an embodiment in which the SL-HARQ-ACK is not transmitted in a cell different from the cell in which a corresponding PSSCH is transmitted.

[Simultaneous transmission of plurality of PSFCHs]

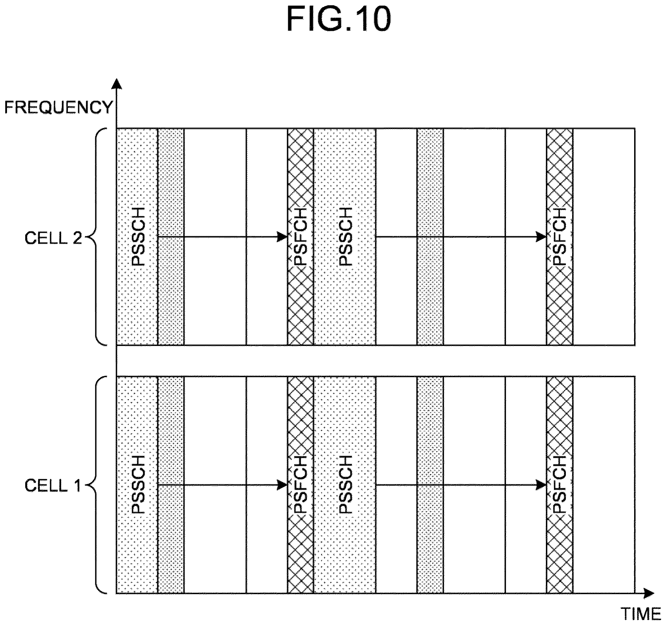

FIG. 10 is a diagram illustrating an example of simultaneous transmission of a plurality of PSFCHs according to the first embodiment of the present disclosure. FIG. 10 illustrates an example in which two cells are set and PSSCH transmission occurs simultaneously in the first and fourth slots. In this case, for two pieces of SL-HARQ-ACK corresponding to the first PSSCH, PSFCHs are transmitted simultaneously in the same cell of the third slot. In addition, for two pieces of SL-HARQ-ACK corresponding to the fourth PSSCH, PSFCHs are transmitted simultaneously in the same cell of the seventh slot.

As described above, in the first embodiment, since operation is possible independently in each cell, the first embodiment can be applied to any terminal device capable of simultaneously transmitting a plurality of first PSFCHs.

(Second embodiment)

In a second embodiment of the present disclosure, it is easy to apply the first embodiment as long as a terminal device can simultaneously transmit a plurality of first PSFCHs. Meanwhile, a situation may be considered in which it is difficult to apply the first embodiment, such as limitation on the number of implemented transmission basebands/transmission RFs, limitation on total transmission power, and half duplex constraint. In such a situation, application of the second embodiment is effective.

In the second embodiment, SL-HARQ-ACK generated in each cell is transmitted on a second PSFCH of one cell. In other words, in the second embodiment, SL-HARQ-ACK can be transmitted in a cell different from a cell in which a corresponding PSSCH is transmitted. Note that hereinafter, a PSFCH transmitted in a conventional PSFCH format (PSFCH format 0) is referred to as a first PSFCH, and a PSFCH transmitted in a new PSFCH format (for example, PSFCH format 1) is referred to as a second PSFCH. That is, the first PSFCH is a PSFCH including one or less piece of HARQ-ACK. The second PSFCH is a PSFCH that may include a plurality of pieces of HARQ-ACK.

[Transmission of second PSFCH]

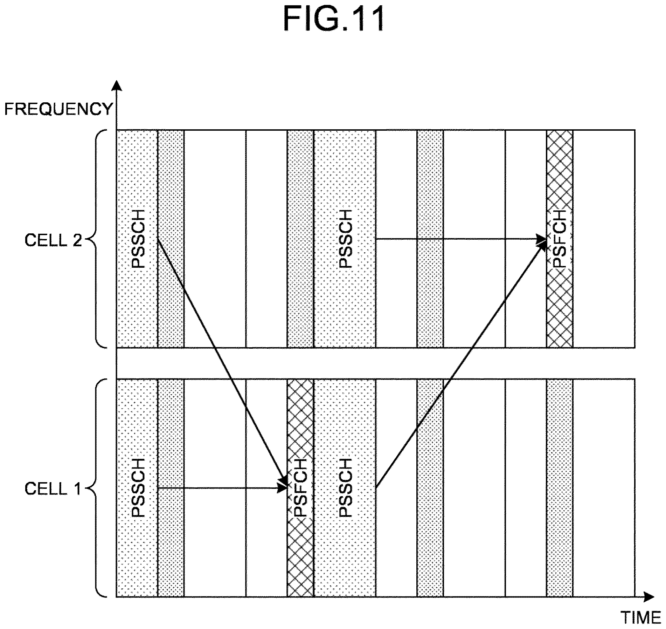

FIG. 11 is a diagram illustrating an example of transmission of the second PSFCH according to the second embodiment of the present disclosure. FIG. 11 illustrates an example in which two cells are set and PSSCH transmission occurs simultaneously in the first and fourth slots similarly to FIG. 10. Unlike the first embodiment, SL-HARQ-ACK corresponding to a PSSCH of a cell 2 transmitted on the first slot is transmitted on a PSFCH of a cell 1. In addition, SL-HARQ-ACK corresponding to a PSSCH of the cell 1 transmitted on the fourth slot is transmitted on a PSFCH of the cell 2.

In this way, in the second embodiment, a plurality of pieces of SL-HARQ-ACK can be transmitted in one cell. Therefore, it is possible to implement low power consumption PSFCH transmission and transmission/reception operations different among a plurality of cells.

(Third embodiment)

A third embodiment is an embodiment in which the simultaneous transmission of PSFCHs according to the first embodiment and the second PSFCH transmission according to the second embodiment are applied in combination.

[Transmission of first PSFCH and second PSFCH]

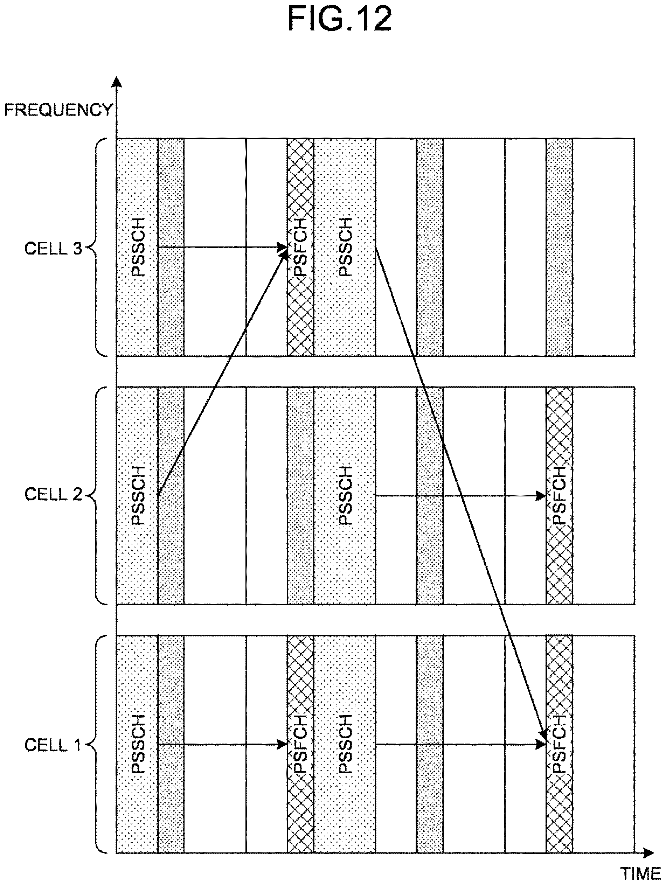

FIG. 12 is a diagram illustrating an example of transmission of a first PSFCH and a second PSFCH according to the third embodiment of the present disclosure. In FIG. 12, three cells are set, and PSSCH transmission occurs simultaneously in the cells. In PSFCH transmission occasion of the third slot, SL-HARQ-ACK corresponding to a PSSCH of a cell 1 is transmitted on a PSFCH of the cell 1, and two pieces of SL-HARQ-ACK corresponding to PSSCHs of a cell 2 and a cell 3 are transmitted on a PSFCH of the cell 3. In PSFCH transmission occasion of the seventh slot, two pieces of SL-HARQ-ACK corresponding to a PSSCH of the cell 1 and the cell 3 are transmitted on a PSFCH of the cell 1, and SL-HARQ-ACK corresponding to a PSSCH of the cell 2 is transmitted on a PSFCH of the cell 2.

The third embodiment enables operation that complements the disadvantages of the first embodiment and the second embodiment.

[Resource region of second PSFCH]

In order to prevent transmission collision between the first PSFCH and the second PSFCH, a resource region of the second PSFCH is preferably set in a resource region different from a resource region of the first PSFCH. Examples of the resource region of the second PSFCH are listed below.

As an example, the resource region of the second PSFCH can be located by frequency division multiplexing (FDM) with the resource region of the first PSFCH in the same resource pool.

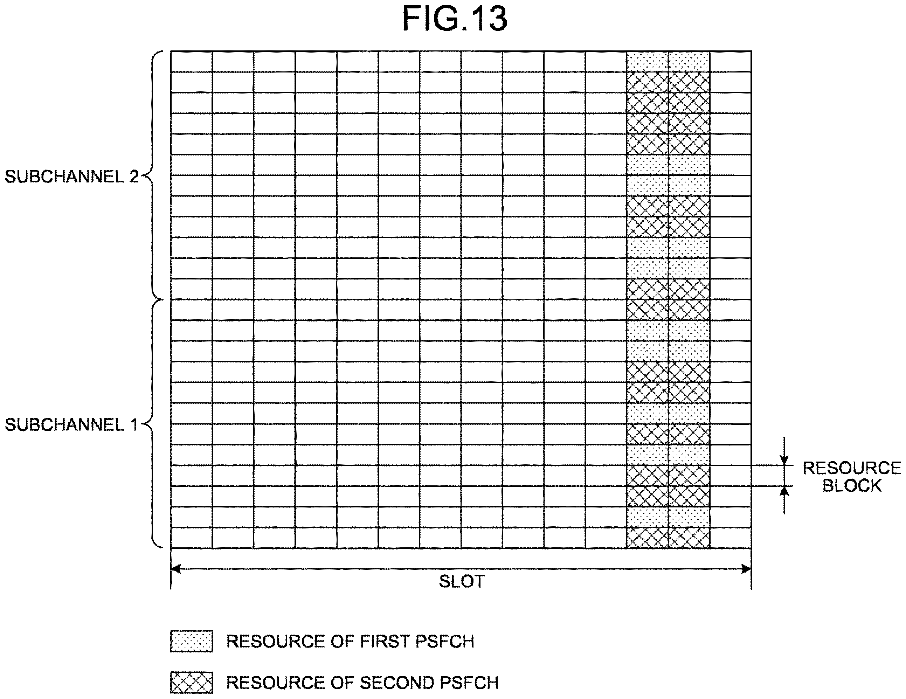

FIG. 13 is a diagram illustrating an example of the resource region of the second PSFCH according to the third embodiment of the present disclosure. In the example of FIG. 13, the second PSFCH is located in the same symbol as the first PSFCH, and a resource block different from that of the first PSFCH is allocated to the second PSFCH. The resource block that can be allocated to the second PSFCH may be all resource blocks other than the resource block allocated to the first PSFCH, or a resource block may be designated by an upper layer.

As another example, the resource region of the second PSFCH may be located in time division multiplexing (TDM) with the resource region of the first PSFCH in the same resource pool.

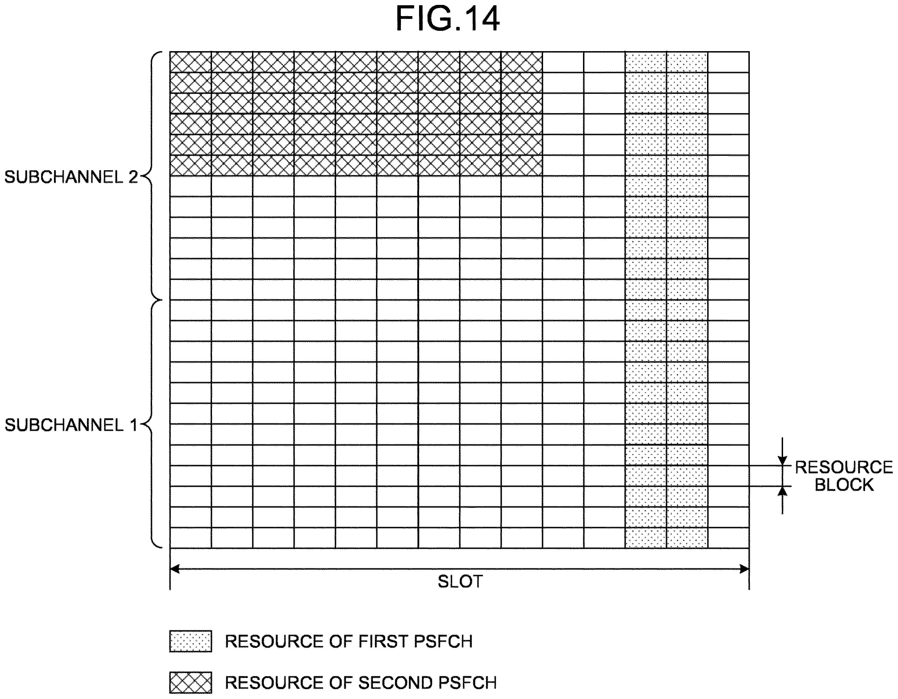

FIG. 14 is a diagram illustrating another example of the resource region of the second PSFCH according to the third embodiment of the present disclosure. In the present example, the second PSFCH is located in a symbol different from that of the first PSFCH. The second PSFCH uses some or all resource blocks of one subchannel. The second PSFCH transmission can be prevented from collision by sensing from another terminal device. A slot in which the second PSFCH is located may be reserved by reservation information. This can prevent collision with PSSCH transmission.

As another example, the resource region of the second PSFCH may be located in a resource pool different from that of the first PSFCH. The different resource pool may be a different resource pool inf the same cell, or may be a resource pools in a different cell.

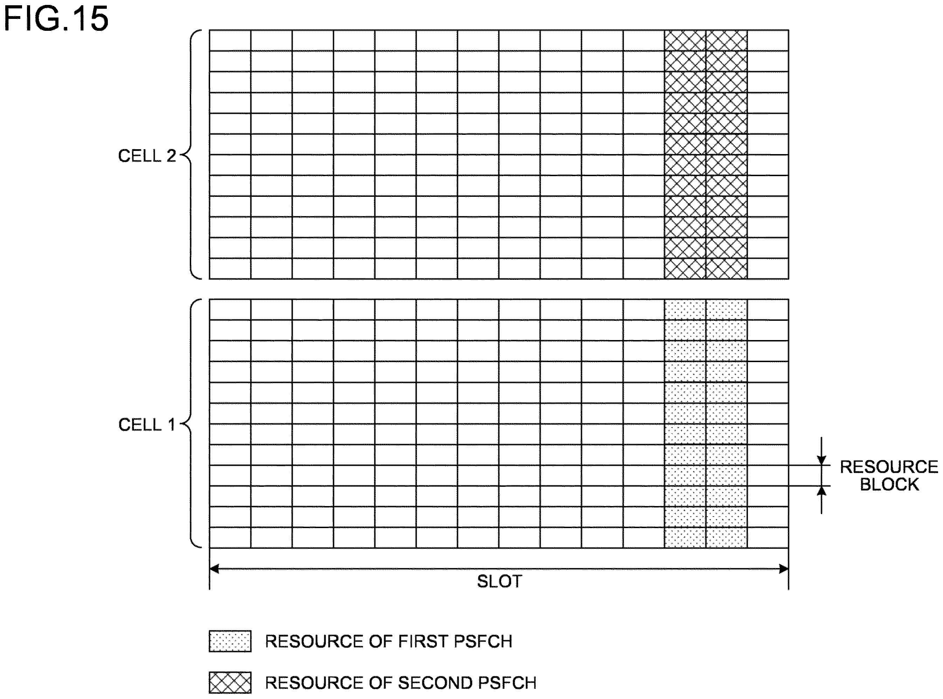

FIG. 15 is a diagram illustrating another example of the resource region of the second PSFCH according to the third embodiment of the present disclosure. In the present example, a resource region of the first PSFCH is set in a cell 1, and a resource region of the second PSFCH is set in a cell 2. Here, since a terminal device (for example, a terminal device prior to 3GPP Release 17) that does not support transmission and reception of the second PSFCH is not connected to the cell 2, it is possible to prevent collision between the first PSFCH transmission and the second PSFCH transmission.

[Physical channel configuration 1 of second PSFCH]

An example of a physical channel configuration of the second PSFCH is a PSFCH format different from that of the first PSFCH. For example, the second PSFCH is referred to as a PSFCH format 1. This second PSFCH format has at least a feature capable of carrying two or more pieces of SL-HARQ-ACK. That is, the second PSFCH can carry a plurality of pieces of SL-HARQ-ACK corresponding to PSSCHs transmitted on a plurality of subchannels, carriers, and/or slots on one physical channel. Note that only one piece of SL-HARQ-ACK can be carried on the second PSFCH format. The second PSFCH format can include, for example, two symbols.

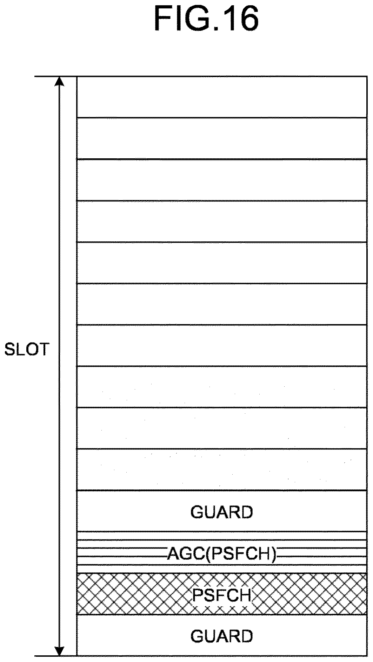

FIG. 16 is a diagram illustrating an example of the format of the second PSFCH according to the third embodiment of the present disclosure. The second PSFCH of the present example has the same symbol configuration as the PSFCH format 0, and includes an AGC symbol at the 12th symbol, a PSFCH at the 13th symbol, and guard symbols as transmission/reception gaps at the 11th and 14th symbols. Some resource elements (REs) of the PSFCH symbol may include a DMRS that demodulates the PSFCH.

As an example of the configuration of the second PSFCH format, the second PSFCH format can include 4 or more and 13 or less symbols.

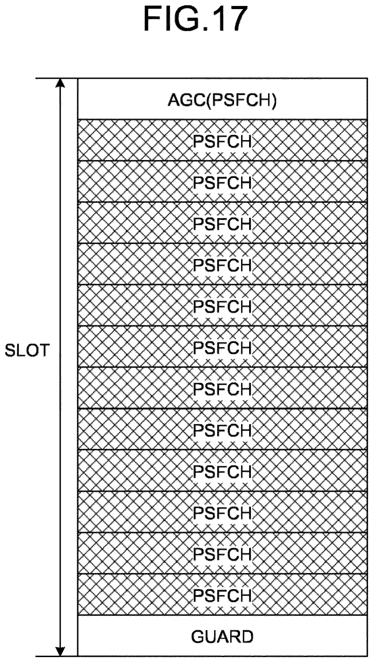

FIG. 17 is a diagram illustrating another example of the format of the second PSFCH according to the third embodiment of the present disclosure. The second PSFCH of the present example includes an AGC symbol at the first symbol, PSFCHs at the second to 13th symbols, and a guard symbol as a transmission/reception gap at the 14th symbol. Some of the PSFCH symbols may be located as DMRSs that demodulate PSFCHs, or DMRSs may be located in some of resource elements of the PSFCH symbols.

[Physical channel configuration 2 of second PSFCH]

Another example of the physical channel configuration of the second PSFCH is defined as a PSSCH. That is, in the present example, the PSSCH can carry SL-HARQ-ACK.

In the present example, the SL-HARQ-ACK may be encoded together with a sidelink shared channel (SL-SCH) that carries sidelink data, may be included in the SL-SCH, or may be located in a predetermined resource element of the PSSCH. In addition, the PSSCH including the SL-HARQ-ACK does not have to include the SL-SCH.

The PSSCH preferably also includes information regarding a corresponding PSSCH together with the SL-HARQ-ACK. Examples of the information regarding a corresponding PSSCH include a resource (slot and subchannel) of a corresponding PSSCH and a HARQ process number. As a result, it is not necessary to associate the PSSCH with the SL-HARQ-ACK according to a resource, and the transmission resource can be flexibly selected.

Alternatively, the PSSCH may include pieces of SL-HARQ-ACK corresponding to the HARQ processes of all the set PSSCH. That is, transmission is possible by a one-shot HARQ codebook described later. In this case, information regarding a corresponding PSSCH does not need to be additionally included, and control overheads can be reduced. Note that, when SL-HARQ-ACK is carried on a PSSCH, SL-HARQ-ACK corresponding to the HARQ process of the PSSCH does not have to be included, and the terminal device recognizes that the SL-HARQ-ACK corresponding to the HARQ process is disabled.

[Method for determining transmission resource of second PSFCH]

A transmission resource of the second PSFCH is determined by a transmission terminal device, a reception terminal device, another terminal device, or a base station. Examples of a method for determining the transmission resource of the second PSFCH are listed below.

As an example of the method for determining the transmission resource of the second PSFCH, the transmission resource is set on the basis of RRC configuration. Examples of the RRC configuration include a configuration of the second PSFCH and a configuration related to carrier aggregation. The configuration of the second PSFCH includes information of transmission resources of one or more second PSFCHs. A second PSFCH resource specific to a reception terminal device is designated or determined by the configuration of the second PSFCH, and when transmission of the second PSFCH is indicated, the second PSFCH is transmitted using the resource. Examples of a parameter designated as the second PSFCH resource include information of a carrier (cell) on which the second PSFCH is transmitted, a PRB (a start PRB and an end PRB, a bitmap, and the like), and a symbol (a start symbol and a symbol length). Examples of the configuration related to carrier aggregation include information that designates a primary cell (PCell) (or a secondary primary cell (PSCell)) in sidelink carrier aggregation. Note that the carrier (cell) on which the second PSFCH is transmitted may be referred to as a PSFCH cell.

As another example of the method for determining the transmission resource of the second PSFCH, the transmission resource is designated by a transmission terminal device using SCI. As a specific example of designation using SCI, a carrier (cell) on which the PSFCH is transmitted and/or a transmission resource of the PSFCH are included in the SCI. In this case, the carrier (cell) on which the PSFCH is transmitted and/or the transmission resource of the PSFCH are preferably included in second stage SCI in which extension of an SCI bit number is easy. As another specific example of designation using SCI, a carrier (cell) on which the PSFCH is transmitted and/or a transmission resource of the PSFCH are designated in association with another field included in the SCI. Examples of the other field include information of resource reservation.

As another example of the method for determining the transmission resource of the second PSFCH, the second PSFCH is transmitted in a primary cell (or a secondary primary cell) in sidelink at all times. The primary cell in the sidelink is, for example, a cell in which an S-SS/PSBCH block is transmitted.

As another example of the method for determining the transmission resource of the second PSFCH, a reception terminal device is determined. As a specific example, the reception terminal device selects a sidelink transmission resource on the basis of a sensing result, and transmits the second PSFCH. As another specific example, the reception terminal device selects a sidelink transmission resource that transmits the second PSFCH from resources reserved by the transmission terminal device. When the transmission resource of the second PSFCH is selected, a predetermined window (section or timer) may be set. The reception terminal device selects a transmission resource from a resource pool in the predetermined window. When the second PSFCH is not transmitted in the predetermined window, the transmission terminal device can determine that it is NACK. The predetermined window is, for example, a window starting from a corresponding PSSCH. As a result, a feedback delay of HARQ-ACK can be controlled.

[HARQ codebook in second PSFCH]

When a plurality of pieces of HARQ-ACK is carried, association between the pieces of HARQ-ACK and a physical shared channel and a size are defined. A configuration of the plurality of pieces of HARQ-ACK is referred to as a HARQ codebook (or a HARQ-ACK codebook). Also in the sidelink, the HARQ codebook is applied when a plurality of pieces of SL-HARQ-ACK is collectively carried on one physical channel (second PSSCH).

As an example of the HARQ codebook in the second PSFCH, a semi-static HARQ codebook (Type 1 HARQ Codebook) can be applied. In the semi-static HARQ codebook, all pieces of SL-HARQ-ACK corresponding to a slot, a subchannel, and a cell on which a PSSCH can be transmitted are included. When a PSSCH is not transmitted, NACK is set in a corresponding piece of HARQ-ACK, and when a PSSCH is transmitted, a decoding result (ACK or NACK) of the PSSCH is set in a corresponding piece of HARQ-ACK.

[Semi-static HARQ codebook in second PSFCH]

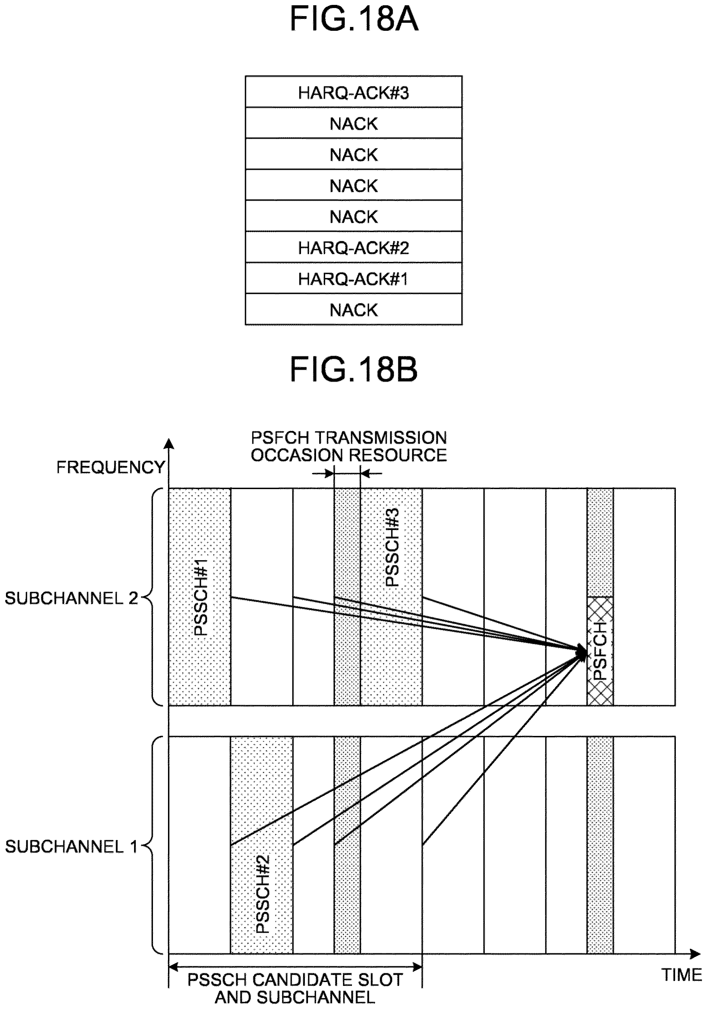

FIG. 18A is a diagram illustrating an example of a semi-static HARQ codebook in the second PSFCH according to the third embodiment of the present disclosure. In FIG. 18A, one rectangle corresponds to a bit representing information of one piece of HARQ-ACK (ACK or NACK). FIG. 18B is a diagram illustrating an example of transmission of the second PSFCH according to the third embodiment of the present disclosure. In this semi-static HARQ codebook, bits are allocated to a slot, a subchannel, and a carrier (cell) corresponding to a PSFCH scheduled to be transmitted. Therefore, in FIGS. 18A and 18B, the HARQ codebook includes eight bits. The bits are associated in order of frequency (subchannel), time (slot), and cell. In the example of FIGS. 18A and 18B, since a PSSCH is transmitted to slot #1 & subchannel #2, slot #2 & subchannel #1, and slot #4 & subchannel #2, pieces of HARQ-ACK are stored in the second, third, and eighth bits correspondingly. Meanwhile, since a PSSCH is not transmitted in the other resources, NACK is stored in the other bits. In this way, in the semi-static HARQ codebook, the order of stored bits is associated with PSSCH candidate resources (PSSCH candidate slots, subchannels, and carriers).

In the semi-static HARQ codebook, when a resource is semi-statically unavailable for PSSCH transmission, the resource can be excluded from the codebook. Examples of the case where a resource is semi-statically unavailable for PSSCH transmission include a resource not set as a resource pool, a resource set as an uplink resource, a resource transmitted as S-SS/PSBCH, and a resource reserved by another terminal device. Meanwhile, in the semi-static HARQ codebook, even in a PSSCH that does not require feedback of SL-HARQ-ACK, NACK is set in a corresponding bit. Examples of the PSSCH that does not require feedback of SL-HARQ-ACK include a PSSCH whose cast type is broadcast and a PSSCH indicated as disabled (unnecessary or disabled) by a HARQ feedback enabled/disabled indicator included in second stage SCI.

In the semi-static HARQ codebook, when HARQ bundling is configured, a HARQ codebook size can be reduced according to a bundling number.

An advantage of the semi-static HARQ codebook is that even when a PSSCH transmitted by a transmission terminal device cannot be detected by a reception terminal device, a discrepancy between the total number of bits of a PSFCH and HARQ-ACK information hardly occurs because the HARQ codebook size is uniform between the transmission terminal device and the reception terminal device.

As another example of the HARQ codebook on the second PSFCH, a dynamic HARQ codebook (Type 2 HARQ Codebook) can be applied. In the dynamic HARQ codebook, only SL-HARQ-ACK corresponding to an actually transmitted PSSCH is included. Unlike the semi-static HARQ codebook, pieces of SL-HARQ-ACK corresponding to a slot, a subchannel, and a cell for which a PSSCH has not been transmitted (or not detected) are not fed back.

[Dynamic HARQ codebook in second PSFCH]

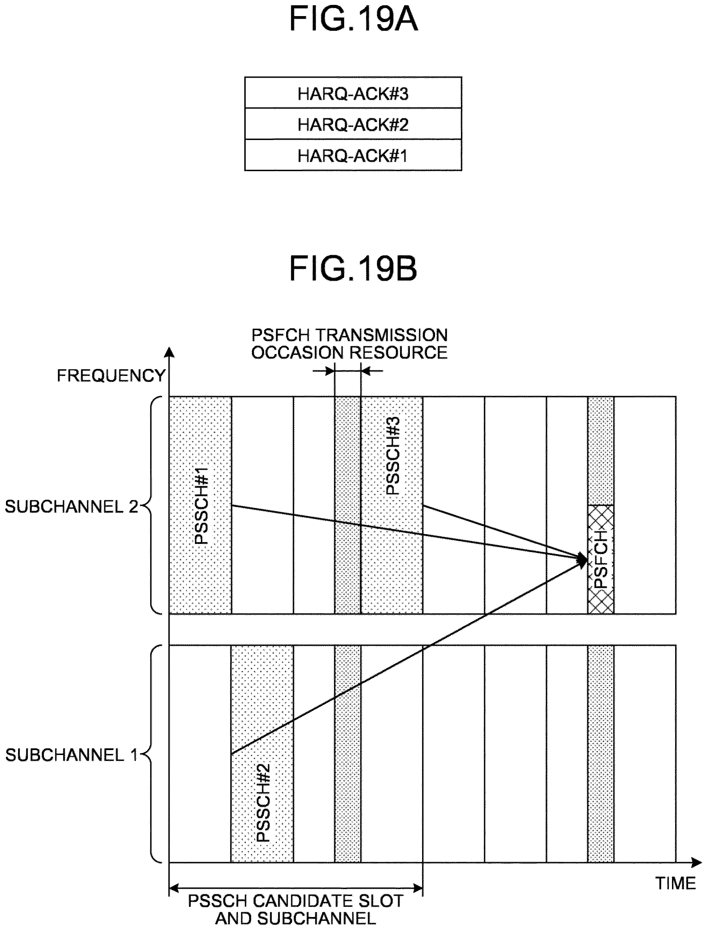

FIG. 19A is a diagram illustrating an example of a dynamic HARQ codebook in the second PSFCH according to the third embodiment of the present disclosure. In FIG. 19A, one rectangle corresponds to a bit representing information of one piece of HARQ-ACK (ACK or NACK). FIG. 19B is a diagram illustrating an example of transmission of the second PSFCH according to the third embodiment of the present disclosure. In the dynamic HARQ codebook, only a piece of HARQ-ACK corresponding to an actual PSSCH is fed back. Therefore, in the example of FIG. 18A, only pieces of HARQ-ACK corresponding to the generated PSSCH #1, #2, and #3 are stored in the HARQ codebook and configured as a 3-bit HARQ codebook.

In the dynamic HARQ codebook, an index (sidelink assignment index (SAI)) that counts the number of times of transmission of PSCCH/PSSCH is preferably included in SCI in order to associate the order of bits with a PSSCH. In carrier aggregation of the sidelink, a counter SAI that counts the number of PSCCHs/PSSCHs transmitted in one cell and a total SAI that counts the number of PSCCHs/PSSCHs transmitted in all cells are preferably included. In the present example, the SAI is preferably included in second stage SCI in which extension of the bit number is easy.

In the dynamic HARQ codebook, even when a PSSCH is transmitted (detected), for a PSSCH that does not require feedback of SL-HARQ-ACK, a piece of HARQ-ACK corresponding to the PSSCH is not fed back and is excluded from the HARQ codebook. Examples of the PSSCH that does not require feedback of SL-HARQ-ACK include a PSSCH whose cast type is broadcast and a PSSCH indicated as unnecessary or disabled by a HARQ feedback enabled/disabled indicator included in second stage SCI.

In the dynamic HARQ codebook, when HARQ bundling is configured, a HARQ codebook size can be reduced according to a bundling number.

As an advantage of the dynamic HARQ codebook, an information bit number (overhead) of a PSFCH can be reduced because only a bit number for which feedback of HARQ-ACK is actually required can be transmitted.

As another example of the HARQ codebook on the second PSFCH, a one-shot HARQ codebook (Type 3 HARQ Codebook) can be applied. In the one-shot HARQ codebook, pieces of HARQ-ACK of all configured HARQ processes are included in the HARQ codebook.

[One-shot HARQ codebook in second PSFCH]

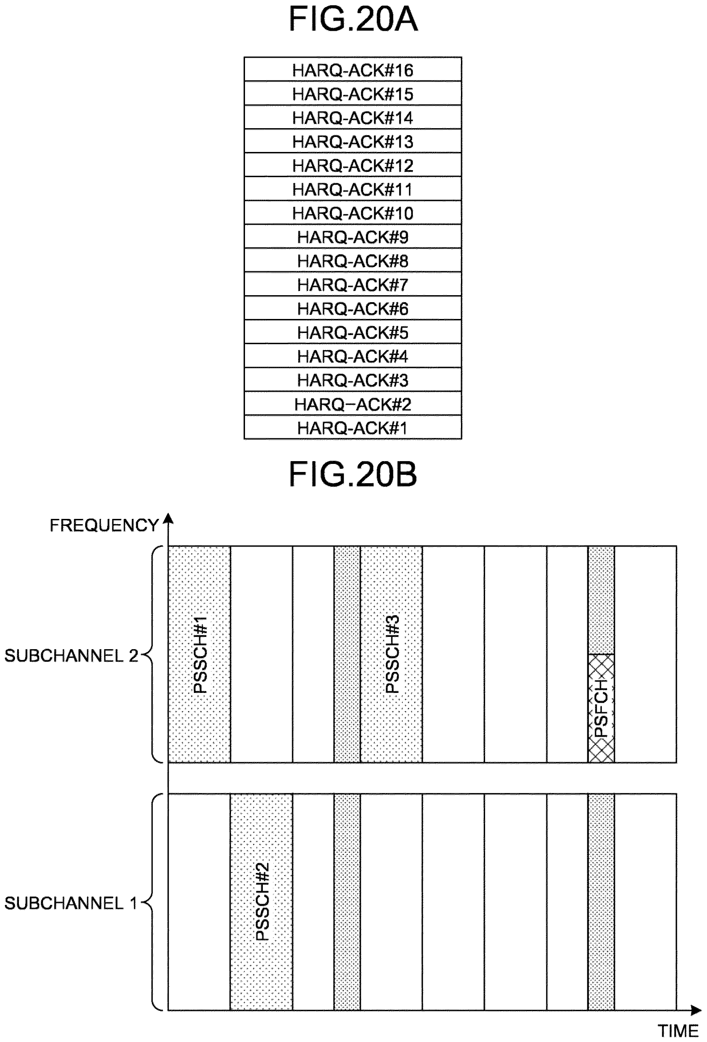

FIG. 20A is a diagram illustrating an example of a one-shot HARQ codebook on the second PSFCH according to the third embodiment of the present disclosure. FIG. 20B is a diagram illustrating an example of transmission of the second PSFCH according to the third embodiment of the present disclosure. In FIG. 20A, when the number of HARQ processes is set to 16, the HARQ codebook includes 16 bits, and pieces of HARQ-ACK are stored in order of HARQ process IDs. In the example of FIG. 20B, actually, only three PSSCHs are transmitted, but a piece of HARQ-ACK corresponding to a HARQ process of a PSSCH that is not transmitted is also stored in the HARQ codebook. A value of the piece of HARQ-ACK corresponding to a HARQ process of a PSSCH that is not transmitted may be NACK, or may be a default value (ACK or NACK). Note that, in FIG. 20B, description of "PSFCH transmission occasion resource" and "PSSCH candidate slot and subchannel" is omitted.

In the one-shot HARQ codebook, transmission is determined on the basis of a trigger of a one-shot HARQ feedback. The trigger of the one-shot HARQ feedback is preferably included in second stage SCI.

When a transmission timing of the one-shot HARQ feedback overlaps (collides) with a transmission timing of another HARQ feedback (for example, feedback using a semi-static HARQ codebook or a dynamic HARQ codebook), preferably, the one-shot HARQ feedback is transmitted and the other HARQ feedback is dropped.

In the one-shot HARQ codebook, even in a PSSCH that does not require feedback of SL-HARQ-ACK, NACK is set in a corresponding bit. Examples of the PSSCH that does not require feedback of SL-HARQ-ACK include a PSSCH whose cast type is broadcast and a PSSCH indicated as disabled (unnecessary or disabled) by a HARQ feedback enabled/disabled indicator included in second stage SCI.

In the one-shot HARQ codebook, when HARQ bundling is configured, a HARQ codebook size can be reduced according to a bundling number. Alternatively, in the one-shot HARQ codebook, the HARQ codebook may include pieces of HARQ-ACK corresponding to all HARQ processes even when HARQ bundling is configured.

Unlike the semi-static HARQ codebook or the dynamic HARQ codebook, in the one-shot HARQ codebook, a relationship between a PSSCH transmission resource and HARQ-ACK is not defined, and all pieces of HARQ-ACK can be fed back. Therefore, even when HARQ-ACK (PSFCH) cannot be transmitted at an indicated timing due to transmission power limitation or half duplex constraint, information of the HARQ-ACK can be fed back using a later resource.

[HARQ feedback operation of NACK-only groupcast on second PSFCH]

In a case where a cast type is indicated as NACK-only groupcast in the first PSFCH, when a decoding result of a corresponding PSSCH is successful (ACK), the PSFCH is not transmitted, and when the decoding result of the corresponding PSSCH is unsuccessful (NACK), the PSFCH is transmitted. Meanwhile, since the second PSFCH may include two or more pieces of HARQ-ACK, examples of the HARQ feedback operation of the groupcast on the second PSFCH are listed below.

As an example of the HARQ feedback operation of the groupcast on the second PSFCH, even when NACK-only is indicated, HARQ-ACK (ACK or NACK) is fed back to a corresponding PSSCH at all times. That is, when NACK-only is indicated and a decoding result of a PSSCH is successful, ACK is set in the HARQ codebook and transmitted while being included in the second PSFCH.

As another example of the HARQ feedback operation of the groupcast on the second PSFCH, when NACK-only is indicated, the HARQ codebook is 1 bit, and a decoding result of a corresponding PSSCH is successful, the second PSFCH is not transmitted, and otherwise, the second PSFCH is transmitted. In this case, the terminal device performs an operation similar to that of the first PSFCH.

As another example of the HARQ feedback operation of the groupcast on the second PSFCH, when all pieces of HARQ-ACK of the HARQ codebook correspond to PSSCHs of the NACK-only groupcast, and decoding results of all the PSSCHs are successful, the second PSFCH is not transmitted, and otherwise, the second PSFCH is transmitted. When the second PSFCH is not transmitted, the transmission terminal device recognizes that all the PSSCHs of the NACK-only groupcast corresponding to the second PSFCHs that have not been transmitted are successfully decoded.

Note that when the second PSFCH is transmitted, a piece of HARQ-ACK (ACK or NACK) corresponding to a PSSCH of the NACK-only groupcast is stored in the HARQ codebook.

[Channel code of second PSFCH]

A channel code is preferably applied to the second PSFCH because the second PSFCH can carry information of two or more bits. As an example of the channel code of the second PSFCH, when the number of bits is 11 or less, a Reed-Muller code is applied, and when the number of bits is more than 11, a polar code is applied. As another example of the channel code of the second PSFCH, an LDPC code is applied.

[Transmission power of second PSFCH]

An example of transmission power of one second PSFCH is calculated by the following formula.

$$P_{PSFCH,k}(i) = P_{0,PSFCH} + 10\log_{10}(2^{\mu} \times M_{RB_{PSFCH}}(i)) + \alpha_{PSFCH} \times PL + \Delta_{TF,k}(i) \text{ [dBm]}$$

Here, k represents an index of the second PSFCH. i represents an index of the PSFCH transmission occasion.

$M_{RB}^{PSFCH}(i)$ represents the number of resource blocks of the second PSFCH in the PSFCH transmission occasion i. $\Delta_{TF,k}$ represents a transmission power adjustment term of the second PSFCH, and when the number of bits of the second PSFCH is 11 or less,

$$\Delta_{TF,k}(i) = 10\log_{10} (K1 \times n_{SL-HARQ-ACK}(i))/N_{RE}(i).$$

Here, K1 is 6. $n_{SL-HARQ-ACK}(i)$ represents the number of bits of SL-HARQ-ACK carried on the second PSFCH. $N_{RE}(i)$ represents the number of resource elements from which a DMRS for demodulating the second PSFCH is removed. When the number of bits of the second PSFCH is more than 11,

$$\Delta_{TF,k}(i) = 10\log_{10} (2^{K2 \times BPRE(i)} - 1).$$

Here, K2 is 2.4. $BPRE(i) = (O_{ACK}(i) + O_{CRC}(i))/N_{RE}(i)$. $O_{ACK}(i)$ represents the number of bits of SL-HARQ-ACK carried on the second PSFCH.

According to the above transmission power calculation formula, when the second PSFCH is transmitted with two bits or more and/or two PRBs or more, appropriate transmission power can be obtained.

[Transmission power adjustment of second PSFCH]

In the same PSFCH transmission occasion, when a plurality of first PSFCHs and a plurality of second PSFCHs are generated, and total transmission power required by the PSFCHs exceeds a maximum transmission power Pcmax of the terminal device, transmission power of the PSFCHs needs to be adjusted.

As an example of a method for adjusting the transmission power of the second PSFCHs, a method for uniformly decreasing the transmission power of each of the PSFCHs until the transmission power becomes the Pcmax or less can be adopted.

As another example of the method for adjusting the transmission power of the second PSFCHs, a second PSFCH with a lower priority can be dropped until the transmission power becomes the Pcmax or less. At this time, the priority may be designated by SCI, may be set by RRC configuration, or may be associated with a resource. The priority of the second PSFCH is determined on the basis of priority handling in the second PSFCH described later.

As another example of the method for adjusting the transmission power of the second PSFCHs, a piece of SL-HARQ-ACK corresponding to a PSSCH with a lower priority can be excluded from the HARQ codebook of the second PSFCH until the transmission power becomes the Pcmax or less. At this time, the priority is a value of a priority index designated by SCI. The number of bits of the HARQ codebook is reduced, and required transmission power can be thereby reduced. Note that transmission of all the PSFCHs from which pieces of HARQ-ACK are excluded is dropped.

[Priority handling in second PSFCH]

In the same PSFCH transmission occasion, for example, when transmission and reception of the second PSFCH occur simultaneously, or when the total transmission power exceeds the maximum transmission power Pcmax of the terminal device, transmission processing or reception processing of the second PSFCH needs to be abandoned. Examples of priority processing (priority handling) are listed below.

As an example of the priority in the second PSFCH, transmission or reception of a second PSFCH including a piece of SL-HARQ-ACK with the highest priority can be prioritized. When there are a plurality of second PSFCHs including the piece of SL-HARQ-ACK with the highest priority, a second PSFCH including a piece of SL-HARQ-ACK with the next highest priority is prioritized.

As another example of the priority in the second PSFCH, transmission or reception of a second PSFCH having the largest number of bits can be prioritized.

As another example of the priority in the second PSFCH, the sum of the priorities of included pieces of SL-HARQ-ACK can be used as the priority of the second PSFCH.

As another example of the priority in the second PSFCH, the priority of the second PSFCH can be determined on the basis of a value indicated by SCI.

The control unit 203 of the terminal device 2 illustrated in FIG. 3 performs control to select a first PSFCH and a second PSFCH, and to cause the transmission unit 207 to transmit the selected result. Note that the first PSFCH is an example of a first sidelink feedback channel described in the claims. The second PSFCH is an example of a second sidelink feedback channel described in the claims. The SL-HARQ-ACK is an example of response information described in the claims.

[Switching between first PSFCH transmission and second PSFCH transmission]

When the second PSFCH is applicable, first PSFCH transmission and second PSFCH transmission are appropriately switched according to a situation. Specifically, the control unit 203 performs control to select a first PSFCH and a second PSFCH and cause the transmission unit 207 to transmit the selected result. Examples of switching between the first PSFCH transmission and the second PFSCH transmission are listed below.

(Condition 1) Number of bits of SL-HARQ-ACK requiring simultaneous transmission

A first PFSCH or a second PFSCH can be selected according to the number of bits of SL-HARQ-ACK requiring simultaneous transmission.
As a specific example, when the number of bits of SL-HARQ-ACK fed back to the same transmission terminal device is 1 or less, the first PSFCH transmission is applied, and when the number of bits is 2 or more, the second PSFCH transmission is applied.

(Condition 2) Number of cells set by carrier aggregation

Application of the first PSFCH or the second PSFCH can be selected on the basis of the number of cells set by carrier aggregation.
As a specific example, when the set number of cells is 1 (that is, when carrier aggregation is not configured), the first PSFCH transmission is applied, and when the set number of cells is 2 or more (that is, when carrier aggregation is configured), the second PSFCH transmission is applied.
Note that setting of the number of cells in carrier aggregation is preferably set semi-statically (by RRC signalling). At the same time, under the present condition, switching between the first PSFCH transmission and the second PSFCH transmission is set semi-statically.

(Condition 3) Indication of SCI

Application of the first PSFCH or the second PSFCH can be selected on the basis of a value of a field included in SCI.
As a specific example, application of the first PSFCH or the second PSFCH can be selected according to an indication of a PSFCH format included in SCI. When the first PSFCH is designated by an indication of the PSFCH format, the first PSFCH transmission is applied, and when the second PSFCH is designated by an indication of the PSFCH format, the second PSFCH transmission is applied. The indication of the PSFCH format may be included in an indication of a PSFCH resource (PRI) or the like. The indication of the PSFCH resource is preferably included in a second stage SCI format (for example, an SCI format 2-A, an SCI format 2-B, or an SCI format 2-C).
As another specific example, application of the first PSFCH or the second PSFCH can be selected according to a scheduling indication related to carrier aggregation by SCI.
Example of the scheduling indication related to carrier aggregation include the number of received pieces of SCI corresponding to the same PSFCH transmission occasion. When one piece of SCI scheduling a PSSCH corresponding to the same PSFCH transmission occasion is received, the first PSFCH transmission is applied, and when two or more pieces of SCI are received, the second PSFCH is applied.
Other examples of the scheduling indication related to carrier aggregation include an indication of cross-carrier scheduling or multi-cell scheduling of the sidelink. When neither cross-carrier scheduling nor multi-cell scheduling is indicated, the first PSFCH transmission is applied, and when cross-carrier scheduling or multi-cell scheduling is indicated, the second PSFCH transmission is applied.
As another specific example, an application of the first PSFCH or the second PSFCH can be selected on the basis of a field that counts the number of pieces of SL-HARQ-ACK included in SCI. The field that counts the number of pieces of SL-HARQ-ACK is, for example, a sidelink assignment index (SAI), and is used for determining the size of a HARQ codebook of the second PSFCH. When the SAI included in SCI indicates 1, the first PSFCH transmission is applied, and when the SAI indicates 2 or more, the second PSFCH transmission is applied.

(Condition 4) Capability of transmission terminal device

Application of the first PSFCH or the second PSFCH can be selected on the basis of a feature and/or a capability of the transmission terminal device that transmits a PSSCH.
As a specific example, application of the first PSFCH or the second PSFCH can be selected according to whether or not the transmission terminal device supports second PSFCH reception. When the transmission terminal device that transmits a PSSCH does not support the second PSFCH reception, the first PSFCH transmission is applied, and when the transmission terminal device supports the second PSFCH reception, the second PSFCH transmission is applied. Examples of the terminal device that does not support the second PSFCH reception include a terminal device that supports a sidelink prior to 3GPP Release 17, and a terminal device that notifies that the second PSFCH reception is not supported by capability information.

As another specific example, application of the first PSFCH or the second PSFCH can be selected according to the number of sidelink reception chains (reception baseband circuits and reception RF circuits) of the transmission terminal device. When the number of the sidelink reception chains of the transmission terminal device is equal to or more than the number of cells set by carrier aggregation, the first PSFCH transmission is applied, and when the number of the sidelink reception chains is less than the set number of cells (for example, one), the second PSFCH transmission is applied.

As another specific example, application of the first PSFCH or the second PSFCH can be selected according to a carrier aggregation-related capability of the transmission terminal device. Examples of the carrier aggregation-related capability include a received cell number that can be set and cross-carrier scheduling support. When the transmission terminal device does not have the carrier aggregation-related capability, the first PSFCH transmission is applied, and when the transmission terminal device has the carrier aggregation-related capability, the second PSFCH transmission is applied.

(Condition 5) Capability of reception terminal device

Application of the first PSFCH or the second PSFCH can be selected on the basis of a feature and/or a capability of the reception terminal device that receives a PSSCH.

As a specific example, application of the first PSFCH or the second PSFCH can be selected according to whether or not the reception terminal device supports second PSFCH transmission. When the reception terminal device that receives a PSSCH does not support the second PSFCH transmission, the first PSFCH transmission is applied, and when the reception terminal device supports the second PSFCH transmission, the second PSFCH transmission is applied. Examples of the terminal device that does not support the second PSFCH transmission include a terminal device that supports a sidelink prior to 3GPP Release 17, and a terminal device that notifies that the second PSFCH transmission is not supported by capability information.

As another specific example, application of the first PFSCH or the second PSFCH can be selected on the basis of a first PSFCH maximum simultaneous transmittable number of the reception terminal device. When the number of bits of SL-HARQ-ACK requiring simultaneous transmission is equal to or less than the first PSFCH maximum simultaneous transmittable number, the first PSFCH transmission is applied, and when the number of bits of SL-HARQ-ACK requiring simultaneous transmission is more than the first PSFCH maximum simultaneous transmittable number, the second PSFCH transmission is applied.

As another specific example, application of the first PSFCH or the second PSFCH can be selected according to the number of transmission chains (transmission baseband circuits and transmission RF circuits). When the number of the sidelink transmission chains of the reception terminal device is equal to or more than the number of cells set by carrier aggregation, the first PSFCH transmission is applied, and when the number of the sidelink transmission chains is less than the set number of cells (for example, one), the second PFSCH transmission is applied.

As another specific example, application of the first PSFCH or the second PSFCH can be selected according to a carrier aggregation-related capability of the reception terminal device. Examples of the carrier aggregation-related capability include a transmitted cell number that can be set and cross-carrier scheduling support. When the reception terminal device does not have the carrier scheduling-related capability, the first PSFCH transmission is applied, and when the reception terminal device has the carrier scheduling-related capability, the second PSFCH transmission is applied.

(Condition 6) Transmission power limitation

The maximum transmission power Pcmax is defined for the terminal device, and it is difficult to allocate a transmission power exceeding the maximum transmission power. Therefore, transmission of a PSFCH that cannot satisfy a transmission request may be dropped (discarded). Application of the first PSFCH or the second PSFCH can be selected according to the PSFCH drop due to transmission power limitation. When all the first PSFCHs are transmittable due to transmission power limitation, the first PSFCH transmission is applied, and when one or more first PSFCHs are dropped, the second PSFCH is used.

As a specific method for adjusting transmission power and selecting the first PSFCH transmission or the second PSFCH, some of the first PSFCHs are dropped, and corresponding pieces of HARQ-ACK can be included in the second PSFCH when the following formula is satisfied:

$$P_{PSFCH,one} + 10log_{10}(N_{Tx,1st\ PSFCH}) \geq P_{2nd\ PSFCH}(i)$$

Here, $N_{Tx,1st\ PSFCH}$ represents the number of first PSFCHs scheduled to be transmitted.

(Condition 7) HARQ bundling

A technique called HARQ bundling of bundling a plurality of pieces of HARQ-ACK as one piece of HARQ-ACK can be studied. As an example of the HARQ bundling, when all pieces of HARQ-ACK are ACK, 1-bit ACK is fed back, and otherwise, 1-bit NACK is fed back. As another example of the HARQ bundling, when all pieces of HARQ-ACK are NACK, 1-bit NACK is fed back, and otherwise, 1-bit ACK is fed back. In this way, application of the first PSFCH or the mite PSFCH can be selected according to application of HARQ bundling between serving cells. When HARQ bundling is applied between a plurality of serving cells, the first PSFCH transmission is applied, and when HARQ bundling is not applied, the second PSFCH transmission is applied.

(Condition 8) Half duplex constraint

In the same band of the sidelink, it is difficult to simultaneously perform transmission and reception, and transmission or reception is selected at a predetermined timing. Transmission or reception is determined on the basis of a priority of data and the like. Therefore, when reception is performed in the PSFCH transmission occasion, PSFCH transmission may be dropped (discarded). Application of the first PSFCH or the second PSFCH can be selected according to PSFCH drop due to half duplex constraint. When all the cells are transmittable at a transmission timing of SL-HARQ-ACK, the first PSFCH is applied, and when one or more untransmittable cells are present, the second PSFCH is applied.

(Condition 9) Cast type

Application of the first PSFCH or the second PSFCH can be selected on the basis of a cast type. When NACK-only groupcast is indicated as a cast type, the first PSFCH transmission is applied to a corresponding HARQ-ACK feedback, and when unicast or ACK/NACK groupcast is indicated, the second PSFCH transmission is applied to a corresponding HARQ-ACK feedback.

(Condition 10) RRC configuration

Application of the first PSFCH or the second PSFCH can be selected on the basis of an RRC configuration. When the second PSFCH is not configured by the RRC configuration (or the first PSFCH is configured), the first PSFCH is applied, and when the second PSFCH is configured (or the first PSFCH is not configured), the second PSFCH is applied. Examples of the RRC configuration include whether or not the second PSFCH is applied (enabled/disabled), a configuration related to a resource of the second PSFCH (slot period or resource block), a configuration related to the second PSFCH transmission (setting of transmission power), and a configuration related to sidelink carrier aggregation.

The RRC configuration may be dedicated RRC signalling individually configured for the terminal device, or may be system information (MIB or SIB) of which the entire cell is informed.

(Condition 11) DCI indication

Application of the first PSFCH or the second PSFCH can be selected on the basis of a value of a field included in DCI. The DCI is a DCI (for example, DCI Format 3_0 or DCI Format 3_1) used for indicating sidelink transmission used in the resource allocation mode 1.

As a specific example, application of the first PSFCH or the second PSFCH can be selected according to an indication of a PSFCH format included in DCI. When the first PSFCH is designated by an indication of the PSFCH format, the first PSFCH transmission is applied, and when the second PSFCH is designated by an indication of the PSFCH format, the second PSFCH transmission is applied.

As another specific example, application of the first PSFCH or the second PSFCH can be selected according to a value of another field that gives a notification of information included in DCI. Examples of the other field include Resource Pool Index, HARQ process number, Lowest index of the subchannel allocation, SCI format 1-A fields, PSFCH-to-HARQ feedback timing indicator, PUCCH resource indicator, Configuration index, Counter sidelink assignment index, and Carrier indicator. Among these other fields, when a predetermined value is indicated, the first PSFCH is applied, and otherwise, the second PSFCH is applied.

The above conditions can be applied in combination. Examples of a combination of conditions are listed below.

Examples of the combination includes RRC configuration and SCI indication. As a specific example, when the second PSFCH is configured by RRC configuration and notification of the second PSFCH transmission is given by SCI, the second PSFCH is applied, and otherwise, the first PSFCH is applied.

Other examples of the combination include a capability of the transmission terminal device and a capability of the reception terminal device. As a specific example, when both the transmission terminal device and the reception terminal device support the second PSFCH, the second PSFCH is applied, and otherwise, the first PSFCH is applied.

Other examples of the combination include transmission power control and half duplex constraint. As a specific example, when one or more pieces of SL-HARQ-ACK need to be dropped due to transmission power limitation and half duplex constraint, the second PSFCH is applied, and otherwise, the first PSFCH is applied.

[Flow of signaling in PSFCH transmission switching]

Hereinafter, a flowchart of switching of PSFCH transmission will be described. Examples of an entity that determines switching of PSFCH transmission include three entities: a terminal device 2c on a transmission side, a terminal device 2d on a reception side, and a base station device 1 (or a primary terminal device).

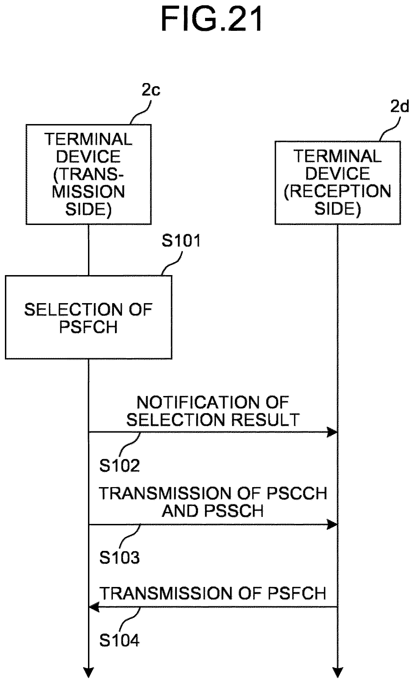

FIG. 21 is a diagram illustrating an example of a communication method according to the third embodiment of the present disclosure. FIG. 21 is a diagram illustrating an example of processing in a case where a terminal device on a transmission side determines switching of PSFCH transmission. The terminal device 2c on the transmission side selects application of the first PSFCH or the second PSFCH on the basis of PSFCH switching conditions (Step S101), and notifies the reception terminal device of the selection result (Step S102). Next, the terminal device 2c on the transmission side transmits a frame including a PSCCH and a PSSCH (Step S103). Next, the terminal device 2d on the reception side transmits a PSFCH based on the selected result of which the terminal device 2d is notified by the terminal device 2c on the transmission side. Specifically, the terminal device 2c on the transmission side transmits a frame including a first PSFCH or a second PSFCH according to the selected result (Step S104).

Indication of a PSFCH transmission method from the terminal device 2c on the transmission side to the terminal device 2d on the reception side may be given before transmission of a PSCCH and a PSSCH, may be given simultaneously, or may be given before transmission of a PSFCH. The indication may be included in SCI, may be included in a PSSCH, or may be given on the basis of a physical parameter (for example, a sequence of DMRSs, a resource of a PSFCH, a sequence or cyclic shift value, or a PSSCH transmission slot and/or PRB).

The flow in which the terminal device 2c on the transmission side determines switching of PSFCH transmission is preferably applied under condition 1 (the number of bits of SL-HARQ-ACK requiring simultaneous transmission), condition 2 (the number of cells set by carrier aggregation), condition 3 (indication of SCI), condition 4 (a capability of the transmission terminal device), condition 5 (a capability of the reception terminal device), condition 7 (HARQ bundling), condition 9 (cast type), and the like among the above conditions used for determination of switching. Meanwhile, the flow is not limited thereto, and can be applied also under other conditions.

Note that, before determining switching of PSFCH transmission, the terminal device 2c on the transmission side may acquire information necessary for the determination in advance from the terminal device 2d on the reception side, another terminal device 2, and/or the base station device 1. Examples of the information necessary for the determination include sidelink setting (PSFCH resource), a configuration of carrier aggregation, and information regarding the terminal device 2d on the reception side (capability, transmission/reception timing, and transmission power).

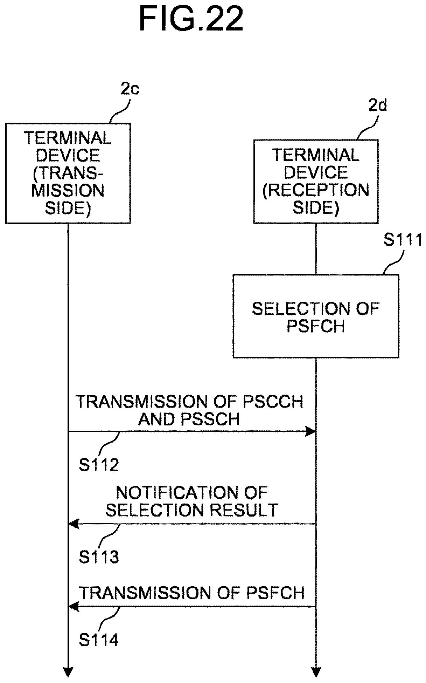

FIG. 22 is a diagram illustrating another example of the communication method according to the third embodiment of the present disclosure. FIG. 22 illustrates an example in a case where the terminal device 2d on the reception side selects application of a first PSFCH or a second PSFCH on the basis of PSFCH switching conditions. The terminal device 2d on the reception side selects application of a first PSFCH or a second PSFCH on the basis of PSFCH switching conditions (Step 5111). When the frame including a PSCCH and a PSSCH is transmitted from the terminal device 2c on the transmission side (Step S112), the terminal device 2d on the reception side notifies the terminal device 2c on the transmission side of the selection result (PSFCH transmission method) (Step S113) . Next, the terminal device 2d on the reception side transmits a frame including a first PSFCH or a PSFCH on the basis of the selected PSFCH transmission method (Step S114) .

Indication of a PSFCH transmission method from the terminal device 2d on the reception side to the terminal device 2c on the transmission side may be given before reception of a PSCCH and a PSSCH, may be given before transmission of a PSFCH, or may be given simultaneously with transmission of the PSFCH. The indication may be included in SCI, may be included in a PSSCH, or may be given on the basis of a physical parameter (for example, a sequence of DMRSs, a resource of a PSFCH, a sequence or cyclic shift value, or a PSSCH transmission slot and/or PRB).

The indication from the terminal device 2d on the reception side is preferably implicitly given using a physical parameter related to a PSFCH, and for example, is transmitted by implicit notification due to a fact that resources of the first PSFCH and the second PSFCH are different from each other. The terminal device 2c on the transmission side can recognize a PSFCH format by blindly detecting a PSFCH from each resource.

The flow in which the terminal device 2d on the reception side determines switching of PSFCH transmission is preferably applied under condition 1 (the number of bits of SL-HARQ-ACK requiring simultaneous transmission), condition 2 (the number of cells set by carrier aggregation), condition 4 (a capability of the transmission terminal device), condition 5 (a capability of the reception terminal device), condition 6 (transmission power limitation), condition 7 (HARQ bundling), condition 8 (half duplex constraint), and the like among the above conditions used for determination of switching. Meanwhile, the flow is not limited thereto, and can be applied also under other conditions.

Note that, before determining switching of PSFCH transmission, the terminal device 2d on the reception side may acquire information necessary for the determination in advance from the terminal device 2c on the transmission side, another terminal device, and/or the base station. Examples of the information necessary for the determination include sidelink setting (PSFCH resource), a configuration of carrier aggregation, and information regarding the transmission terminal device (capability and transmission/reception timing).

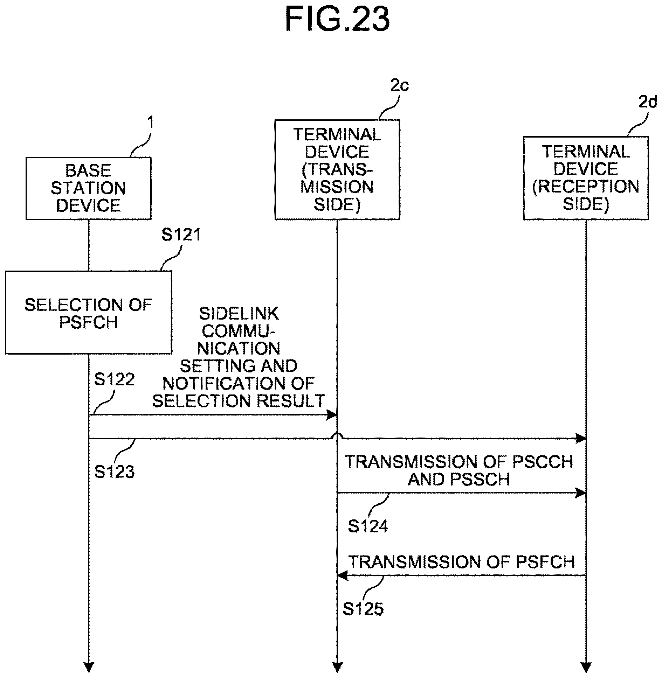

FIG. 23 is a diagram illustrating another example of the communication method according to the third embodiment of the present disclosure. FIG. 23 illustrates an example in which the base station device 1 selects application of a first PSFCH or a second PSFCH on the basis of PSFCH switching conditions. In this case, the control unit 103 of the base station device 1 illustrated in FIG. 2 performs control to select a first PSFCH and a second PSFCH, and to cause the transmission unit 107 to transmit the selected result. The base station device 1 selects application of a first PSFCH or a second PSFCH on the basis of PSFCH switching conditions (Step S121), and performs sidelink communication setting and notifies the terminal devices 2c and 2d of the selection result (Steps S122 and S123). The terminal device 2c on the transmission side and the terminal device 2d on the reception side perform sidelink communication on the basis of a PSFCH transmission method indicated by the base station (Steps S124 and S125).

Note that the base station may notify only the terminal device 2c on the transmission side, only the terminal device 2d on the reception side, or both the terminal device 2c on the transmission side and the terminal device 2d on the reception side of the PSFCH transmission method. A terminal device that has received the PSFCH transmission method may further notify another terminal device of the PSFCH transmission method.

Indication of the PSFCH transmission method from the base station device 1 to a terminal device may be given before transmission of a PSCCH and a PSSCH, or may be given before transmission of a PSFCH. The indication is included in system information (SIB), dedicated RRC signalling, MAC CE, DCI, and the like.

The flow in which the base station device 1 determines switching of PSFCH transmission is preferably applied under condition 1 (the number of bits of SL-HARQ-ACK requiring simultaneous transmission), condition 2 (the number of cells set by carrier aggregation), condition 4 (a capability of the transmission terminal device), condition 5 (a capability of the reception terminal device), condition 7 (HARQ bundling), condition 10 (RRC configuration), condition 11 (DCI indication), and the like among the above conditions used for determination of switching. Meanwhile, the flow is not limited thereto, and can be applied also under other conditions.

Note that, before determining switching of PSFCH transmission, the base station device 1 may acquire information necessary for the determination in advance from a terminal device. Examples of the information necessary for the determination include sidelink setting (PSFCH resource), a location or zone of a terminal device, a configuration of carrier aggregation, and information regarding the terminal device (capability, transmission/reception timing, and transmission power).

[SL-HARQ-ACK feedback by groupcast]

In the present embodiment, a plurality of pieces of SL-HARQ-ACK for different transmission terminal devices can be transmitted while being included in one sidelink physical channel (second PSFCH). Transmission resources of the second PSFCH including a plurality of pieces of SL-HARQ-ACK for different transmission terminal devices can be configured on the basis of, for example, a destination ID, an upper layer parameter, and/or selection of a reception terminal device.

In this way, the communication device according to the third embodiment of the present disclosure selects a first PSFCH and a second PSFCH including a plurality of pieces of response information, and performs sidelink communication. As a result, a communication speed and the like can be improved in sidelink communication to which carrier aggregation is applied.

[Application of second PSFCH in unlicensed band]

In an unlicensed band available to different operators and/or nodes, Listen Before Talk (LBT, Carrier Sense, or CCA) needs to be performed before transmission of a signal. When LBT succeeds, transmission is possible during a predetermined period, but when LBT fails, transmission should not be performed. Therefore, even in sidelink communication in an unlicensed band, a PSFCH cannot be transmitted when LBT fails. Even in such a situation, application of a second PSFCH is effective. Specifically, SL-HARQ-ACK that cannot be transmitted is transmitted while being included using the second PSFCH, and the HARQ-ACK transmission failure caused by the LBT failure can be thereby recovered.

As a specific example, when LBT before transmission of a first PSFCH succeeds, the first PSFCH is transmitted. Meanwhile, when LBT before transmission of the first PSFCH fails, the first PSFCH cannot be transmitted, and therefore the first PSFCH is dropped. Then, when LBT succeeds and a channel occupancy time (COT) can be acquired at a later timing, SL-HARQ-ACK scheduled to be transmitted on the dropped first PSFCH is transmitted on the second PSFCH while being included.

As another specific example, in sidelink operation in an unlicensed band, the second PSFCH is applied at all times. In other words, the first PSFCH is not applied in sidelink operation in an unlicensed band.

Note that the sidelink operation in an unlicensed band is paraphrased as, for example, an operation in a shared spectrum, an operation in a predetermined band (a band including a 2.4 GHz band/5 GHz band/6 GHz band, a band n46, or the like), an operation in which a discovery burst transmission window (DBTW) is effective, an operation in which LBT is required before transmission, or an operation in which a function (an interlaced waveform, narrowband frequency hopping, or the like) required in an unlicensed operation is effective.

Also in the sidelink in an unlicensed band, a retransmission indication of a dropped piece of HARQ-ACK may be given, or an indication of one-shot HARQ may be given. The retransmission indication of a dropped piece of HARQ-ACK is, for example, an indication of a PSSCH group. These indications are preferably included in SCI.

[HARQ feedback operation of NACK-only groupcast in unlicensed band]

When the cast type is indicated as NACK-only groupcast, the terminal device transmits a PSFCH only in a case of NACK. Meanwhile, when LBT fails in an unlicensed band, a PSFCH is not transmitted. In this case, it is difficult for the transmission terminal device to distinguish between ACK and LBT failure. Solutions to avoid ambiguity of ACK and LBT failure in an unlicensed band are listed below.

As an example, in an unlicensed band, the cast type is not indicated as NACK-only groupcast. The NACK-only groupcast is not used and becomes disabled.

As another example, in an unlicensed band, ACK-only groupcast is applied instead of the NACK-only groupcast. In the ACK-only groupcast, a plurality of terminal devices in the groupcast transmits a PSFCH only in a case of ACK in the same resource.

As another example, when the NACK-only groupcast cannot be transmitted due to LBT failure in an unlicensed band, NACK is transmitted at a later timing. In this case, a predetermined section (timer or window) is preferably set. The transmission terminal device does not recognize ACK until a predetermined section elapses after transmission of the NACK-only groupcast. That is, the transmission terminal device recognizes that the groupcast is NACK when a PSFCH is received within a predetermined section, and recognizes that the groupcast is ACK when a PSFCH is not received from any reception terminal device even after the predetermined section elapses. When NACK is transmitted at a later timing, the first PSFCH may be applied or the second PSFCH may be applied.

(Other modifications)

A control device that controls a management device 10, a base station 20, a relay station 30, and a terminal device 40 of the present embodiment may be implemented by a dedicated computer system or a general-purpose computer system.

For example, a communication program for executing the above-described operation is stored in a computer-readable recording medium such as an optical disk, a semiconductor memory, a magnetic tape, or a flexible disk, and distributed. Then, for example, the program is installed in a computer, and the above-described processing is executed to configure the control device. At this time, the control device may be a device (for example, a personal computer) outside the management device 10, the base station 20, the relay station 30, and the terminal device 40. In addition, the control device may be devices (for example, a control unit 13, a control unit 23, a control unit 33, and a control unit 43) inside the management device 10, the base station 20, the relay station 30, and the terminal device 40.

In addition, the communication program may be stored in a disk device included in a server device on a network such as the Internet such that the communication program can be downloaded to a computer. In addition, the above-described function may be implemented by cooperation of an operating system (OS) and application software. In this case, a portion other than the OS may be stored in a medium and distributed, or a portion other than the OS may be stored in a server device and downloaded or the like to a computer.

Among the processes described in the above embodiments, all or some of the processes described as being performed automatically can be performed manually, or all or some of the processes described as being performed manually can be performed automatically by a known method. In addition, the processing procedure, specific name, and information including various types of data and parameters illustrated in the above description and the drawings can be arbitrarily changed unless otherwise specified. For example, the various types of information illustrated in the drawings are not limited to the illustrated information.

In addition, each component of each device illustrated in the drawings is functionally conceptual, and does not necessarily need to be physically configured as illustrated in the drawings. That is, a specific form of distribution and integration of each device is not limited to the illustrated form, and the whole or a part thereof can be functionally or physically distributed and integrated in any unit according to various loads, usage conditions, and the like. Note that this configuration by distribution and integration may be performed dynamically.

In addition, the above-described embodiments can be appropriately combined in a region in which the processing contents do not contradict each other. In addition, the order of the steps illustrated in the flowcharts of the above-described embodiments can be appropriately changed.

In addition, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected to each other via a network, and one device in which a plurality of modules is housed in one housing are both systems.

In addition, for example, the present embodiment can adopt a configuration of cloud computing in which one function is shared and processed by a plurality of devices in cooperation via a network.

Although the embodiments of the present disclosure have been described above, the technical scope of the present disclosure is not limited to the above-described embodiments as they are, and various modifications can be made without departing from the gist of the present disclosure. In addition, components of different embodiments and modifications may be appropriately combined with each other.

Note that the effects described here are merely examples and are not limited, and other effects may be exhibited.

Note that the present technique can also have the following configurations.

(1) A communication device comprising:

a reception unit that receives a sidelink shared channel for sidelink communication that is device-to-device communication;
a transmission unit that transmits a first sidelink feedback channel and a second sidelink feedback channel for transmitting response information of the sidelink shared channel; and
a control unit that performs control to select the first sidelink feedback channel and the second sidelink feedback channel, and to cause the transmission unit to transmit the selected result.

(2) The communication device according to the above (1), wherein

the first sidelink feedback channel includes one or less piece of the response information, and
the second sidelink feedback channel includes a plurality of pieces of the response information.

(3) The communication device according to the above (1) or (2), wherein
the control unit selects the second sidelink feedback channel when transmitting a plurality of pieces of the response information.

(4) The communication device according to the above (1) or (2), wherein
the control unit selects the second sidelink feedback channel when performing the sidelink communication by a plurality of cells.

(5) The communication device according to the above (1) or (2), wherein
the control unit performs the selection on a basis of sidelink control information that is information of the sidelink shared channel.

(6) The communication device according to the above (1) or (2), wherein
the control unit performs the selection on a basis of a simultaneous transmittable number of the first sidelink feedback channels in the transmission unit.

(7) The communication device according to the above (1) or (2), wherein
the control unit performs the selection on a basis of transmission power in the transmission unit.

(8) The communication device according to the above (1) or (2), wherein
the control unit selects the second sidelink feedback channel when another communication device can receive the response information to be transmitted when the response information is transmitted.

(9) The communication device according to the above (1) or (2), wherein

the control unit performs the selection on a basis of a cast type of the sidelink communication.

(10) A communication device comprising
a control unit that performs control to select a first sidelink feedback channel and a second sidelink feedback channel for transmitting response information of a sidelink shared channel for sidelink communication that is device-to-device communication to a communication device that performs the sidelink communication, and to transmit information of the selected result.

(11) A communication method comprising:

receiving a sidelink shared channel for sidelink communication that is device-to-device communication;
transmitting a first sidelink feedback channel and a second sidelink feedback channel for transmitting response information of the sidelink shared channel; and
performing control to select the first sidelink feedback channel and the second sidelink feedback channel, and to cause the transmission unit to transmit the selected result.

(12) A communication method comprising
performing control to select a first sidelink feedback channel and a second sidelink feedback channel for transmitting response information of a sidelink shared channel for sidelink communication that is device-to-device communication to a communication device that performs the sidelink communication, and to transmit information of the selected result.

Reference Signs List

1 BASE STATION DEVICE
2, 2a, 2c, 2d TERMINAL DEVICE
103, 203 CONTROL UNIT
105, 205 RECEPTION UNIT
107, 207 TRANSMISSION UNIT

**Claims**

1. A communication device comprising:

   a reception unit that receives a sidelink shared channel for sidelink communication that is device-to-device communication;
   a transmission unit that transmits a first sidelink feedback channel and a second sidelink feedback channel for transmitting response information of the sidelink shared channel; and
   a control unit that performs control to select the first sidelink feedback channel and the second sidelink feedback channel, and to cause the transmission unit to transmit the selected result.

2. The communication device according to claim 1, wherein

   the first sidelink feedback channel includes one or less piece of the response information, and
   the second sidelink feedback channel includes a plurality of pieces of the response information.

3. The communication device according to claim 1, wherein
   the control unit selects the second sidelink feedback channel when transmitting a plurality of pieces of the response information.

4. The communication device according to claim 1, wherein
   the control unit selects the second sidelink feedback channel when performing the sidelink communication by a plurality of cells.

5. The communication device according to claim 1, wherein
   the control unit performs the selection on a basis of sidelink control information that is information of the sidelink shared channel.

6. The communication device according to claim 1, wherein
the control unit performs the selection on a basis of a simultaneous transmittable number of the first sidelink feedback channels in the transmission unit.

7. The communication device according to claim 1, wherein
the control unit performs the selection on a basis of transmission power in the transmission unit.

8. The communication device according to claim 1, wherein
the control unit selects the second sidelink feedback channel when another communication device can receive the response information to be transmitted when the response information is transmitted.

9. The communication device according to claim 1, wherein
the control unit performs the selection on a basis of a cast type of the sidelink communication.

10. A communication device comprising
a control unit that performs control to select a first sidelink feedback channel and a second sidelink feedback channel for transmitting response information of a sidelink shared channel for sidelink communication that is device-to-device communication to a communication device that performs the sidelink communication, and to transmit information of the selected result.

11. A communication method comprising:

receiving a sidelink shared channel for sidelink communication that is device-to-device communication;
transmitting a first sidelink feedback channel and a second sidelink feedback channel for transmitting response information of the sidelink shared channel; and
performing control to select the first sidelink feedback channel and the second sidelink feedback channel, and to cause the transmission unit to transmit the selected result.

12. A communication method comprising
performing control to select a first sidelink feedback channel and a second sidelink feedback channel for transmitting response information of a sidelink shared channel for sidelink communication that is device-to-device communication to a communication device that performs the sidelink communication, and to transmit information of the selected result.

# FIG.1

# FIG.2

FIG.3

EP 4 440 216 A1

# FIG.4

| | | |
|---|---|---|
| AGC | | |
| PSCCH | PSSCH | |
| | PSSCH | |
| DMRS | | |
| PSSCH | | |
| PSSCH | | |
| PSSCH | | |
| PSSCH | | |
| PSSCH | | |
| PSSCH | | |
| DMRS | | |
| PSSCH | | |
| PSSCH | | |
| GUARD | | |

SLOT

# FIG.5

# FIG.6

# FIG.7

1

gNB

SETTING
INFORMATION

2a

PRIMARY TERMINAL
DEVICE

ASSIST
INFORMATION

ASSIST
INFORMATION

2b

SECONDARY
TERMINAL
DEVICE

SIDELINK
COMMUNICATION

2b

SECONDARY
TERMINAL
DEVICE

TERMINAL GROUP

# FIG.8

# FIG.9

# FIG.10

# FIG.11

# FIG.12

# FIG.13

SUBCHANNEL 2

SUBCHANNEL 1

RESOURCE BLOCK

SLOT

RESOURCE OF FIRST PSFCH

RESOURCE OF SECOND PSFCH

EP 4 440 216 A1

# FIG.14

SUBCHANNEL 2

SUBCHANNEL 1

RESOURCE BLOCK

SLOT

▨ RESOURCE OF FIRST PSFCH

▨ RESOURCE OF SECOND PSFCH

# FIG.15

CELL 2

CELL 1

RESOURCE BLOCK

SLOT

RESOURCE OF FIRST PSFCH

RESOURCE OF SECOND PSFCH

EP 4 440 216 A1

# FIG.16

| | |
|---|---|
| | |
| | |
| | |
| | |
| | |
| | |
| | |
| | |
| GUARD | |
| AGC(PSFCH) | |
| PSFCH | |
| GUARD | |

SLOT

# FIG.17

# FIG.18A

| |
|---|
| HARQ-ACK#3 |
| NACK |
| NACK |
| NACK |
| NACK |
| HARQ-ACK#2 |
| HARQ-ACK#1 |
| NACK |

# FIG.18B

# FIG.19A

| HARQ-ACK#3 |
| HARQ-ACK#2 |
| HARQ-ACK#1 |

# FIG.19B

# FIG.20A

| |
|---|
| HARQ-ACK#16 |
| HARQ-ACK#15 |
| HARQ-ACK#14 |
| HARQ-ACK#13 |
| HARQ-ACK#12 |
| HARQ-ACK#11 |
| HARQ-ACK#10 |
| HARQ-ACK#9 |
| HARQ-ACK#8 |
| HARQ-ACK#7 |
| HARQ-ACK#6 |
| HARQ-ACK#5 |
| HARQ-ACK#4 |
| HARQ-ACK#3 |
| HARQ−ACK#2 |
| HARQ-ACK#1 |

# FIG.20B

# FIG.21

2c

TERMINAL
DEVICE
(TRANS-
MISSION
SIDE)

2d

TERMINAL
DEVICE
(RECEPTION
SIDE)

S101

SELECTION OF
PSFCH

NOTIFICATION OF
SELECTION RESULT

S102

TRANSMISSION OF PSCCH
AND PSSCH

S103

TRANSMISSION OF PSFCH

S104

# FIG.22

2c

TERMINAL
DEVICE
(TRANS-
MISSION
SIDE)

2d

TERMINAL
DEVICE
(RECEPTION
SIDE)

S111

SELECTION OF
PSFCH

TRANSMISSION OF PSCCH
AND PSSCH

S112

NOTIFICATION OF
SELECTION RESULT

S113

TRANSMISSION OF PSFCH

S114

# FIG.23

2c

2d

1

BASE
STATION
DEVICE

TERMINAL
DEVICE
(TRANS-
MISSION
SIDE)

TERMINAL
DEVICE
(RECEPTION
SIDE)

S121

SELECTION OF
PSFCH

SIDELINK
COMMU-
NICATION
SETTING AND
NOTIFICATION OF
SELECTION RESULT

S122

S123

TRANSMISSION OF PSCCH
AND PSSCH

S124

TRANSMISSION OF PSFCH

S125

## INTERNATIONAL SEARCH REPORT

International application No.

**PCT/JP2022/041298**

### A. CLASSIFICATION OF SUBJECT MATTER

*H04W 72/02*(2009.01)i; *H04W 4/46*(2018.01)i; *H04W 28/04*(2009.01)i; *H04W 72/0457*(2023.01)i; *H04W 72/20*(2023.01)i; *H04W 76/14*(2018.01)i; *H04W 92/18*(2009.01)i
FI:   H04W72/02; H04W4/46; H04W28/04 110; H04W72/04 111; H04W72/04 136; H04W76/14; H04W92/18

According to International Patent Classification (IPC) or to both national classification and IPC

### B. FIELDS SEARCHED

Minimum documentation searched (classification system followed by classification symbols)

H04W72/02; H04W4/46; H04W28/04; H04W72/04; H04W76/14; H04W92/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2020/0351033 A1 (SAMSUNG ELECTRONICS CO., LTD.) 05 November 2020 (2020-11-05)<br>paragraphs [0384]-[0393], [0438] | 1, 5, 9, 11 |
| Y | paragraphs [0384]-[0393], [0438] | 2-4, 6-8 |
| A | paragraphs [0384]-[0393], [0438] | 10, 12 |
| X | WO 2021/090459 A1 (NTT DOCOMO, INC.) 14 May 2021 (2021-05-14)<br>paragraphs [0056], [0058], [0063] | 10, 12 |
| A | paragraphs [0056], [0058], [0063] | 1-9, 11 |
| Y | US 2020/0344722 A1 (SAMSUNG ELECTRONICS CO., LTD.) 29 October 2020 (2020-10-29)<br>paragraphs [0231]-[0237] | 2-3 |
| Y | US 2021/0050953 A1 (INNOVATIVE TECHNOLOGY LAB CO., LTD.) 18 February 2021 (2021-02-18)<br>paragraphs [0180]-[0184], fig. 15 | 4 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/041298**

**C.      DOCUMENTS CONSIDERED TO BE RELEVANT**

| Category* | Citation of document, with indication, where appropriate, of the relevant passages | Relevant to claim No. |
|---|---|---|
| Y | Moderator (AT & T). Summary of UE features for 5G V2X. 3GPP TSG RAN WG1#102-e R1-2005946. 19 August 2020<br>    p. 12 | 6, 8 |
| Y | VIVO. Remaining issues on physical layer procedure for NR sidelink. 3GPP TSG RAN WG1#100b_e R1-2001665. 10 April 2020<br>    section 4 | 7 |

Form PCT/ISA/210 (second sheet) (January 2015)

**INTERNATIONAL SEARCH REPORT**
Information on patent family members

International application No.

**PCT/JP2022/041298**

| Patent document cited in search report | Publication date (day/month/year) | Patent family member(s) | Publication date (day/month/year) |
|---|---|---|---|
| US 2020/0351033 A1 | 05 November 2020 | WO 2020/222565 A1 paragraphs [0386]-[0395], [0441] KR 10-2020-0127827 A | |
| WO 2021/090459 A1 | 14 May 2021 | (Family: none) | |
| US 2020/0344722 A1 | 29 October 2020 | WO 2020/218892 A1 paragraphs [0234]-[0240] KR 10-2021-0145846 A CN 113748628 A | |
| US 2021/0050953 A1 | 18 February 2021 | WO 2021/034033 A1 paragraphs [0213]-[0217], fig. 15 KR 10-2021-0020739 A CN 114258653 A | |

Form PCT/ISA/210 (patent family annex) (January 2015)

**EP 4 440 216 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020166280 A